# EUROPÄISCHE PATENTSCHRIFT

(11) **EP 1 400 096 B1**
(45) Veröffentlichungstag und Bekanntmachung des Hinweises auf die Patenterteilung: **31.07.2013**
(21) Anmeldenummer: 02748606.7
(22) Anmeldetag: 28.06.2002
(51) Int. Cl.: H04M 1/727

(54) **ANMELDEN VON AKKUBETRIEBENEN MOBILTEILEN AN BASISSTATIONEN MIT EINER AKKULADEEINRICHTUNG**
LOGGING IN OF BATTERY-OPERATED MOBILE PARTS IN BASE STATIONS WITH A BATTERY CHARGING DEVICE
DEMANDE DE CONNEXION DE PARTIES MOBILES FONCTIONNANT SUR ACCUMULATEUR A DES STATIONS DE BASE POURVUES D'UN DISPOSITIF DE CHARGE D'ACCUMULATEUR

(30) Priorität: 28.06.2001 DE 10131206
(43) Veröffentlichungstag der Anmeldung: 24.03.2004
(73) Patentinhaber: Gigaset Communications GmbH, 81379 München (DE)
(72) Erfinder: FISCHEDICK, Thomas, 46348 Raesfeld (DE); HOLTMANN, Frank, Peter, 44147 Dortmund (DE); HEYNEN, Dominic, 46499 Hamminkeln (DE); OBER, Uwe, 48565 Steinfurt (DE); SCHOLZ, Peter, 46395 Bocholt (DE); VIEREGGE, Jens, 59425 Unna (DE); ZAVELBERG, Martin, 50999 Koeln (DE)
(74) Vertreter: Michalski Hüttermann & Partner Patentanwälte
(86) Internationale Anmeldenummer: PCT/DE2002/002355
(87) Internationale Veröffentlichungsnummer: WO 2003/003702

(56) Entgegenhaltungen:
- WO-A-99/31859
- DE-A- 19 740 934
- GB-A- 2 124 454
- US-A- 5 495 520
- US-A- 5 640 680

## Beschreibung

Die Erfindung bezieht sich auf eine Verfahren zum Anmelden von akkubetriebenen Mobilteilen an Basisstationen mit einer Akkuladeeinrichtung von Telekommunikationssystemen zur drahtlosen Telekommunikation gemäß dem Oberbegriff des Patentanspruches 1, auf ein akkubetriebenes Mobilteil zum Anmelden an einer Basisstation mit einer Akkuladeeinrichtung von Telekommunikationssystemen zur drahtlosen Telekommunikation gemäß dem Oberbegriff des Patentanspruches 9 und auf ein Telekommunikationssystem zur drahtlosen Telekommunikation, bestehend aus einer Basisstation mit einer Akkuladeeinrichtung und einem akkubetriebenen Mobilteil, zum Anmelden des akkubetriebenen Mobilteils an der Basisstation gemäß dem Oberbegriff des Patentanspruches 15.

Telekommunikationssysteme zur drahtlosen Telekommunikation, die jeweils aus mindestens einer Basisstation mit einer Akkuladeeinrichtung und aus mindestens einem akkubetriebenen Mobilteil bestehen, sind beispielsweise Schnurlos-Telekommunikationssysteme, mit denen man über kurze Entfernungen mobil über das Festnetz, z.B. das ISDN- oder PSTN, einerseits telefonieren bzw. Nah- und Ferngespräche führen - also Sprachdaten und andererseits Paketdaten, z.B. SMS-Nachrichten, übertragen bzw. austauschen kann. Darüber hinaus wird es in absehbarer Zeit auch Schnurlos-Telekommunikationssysteme geben, die für die Sprach- und Paketdatenübertragung über das Internet geeignet sind. Aus diesem Grund wird ein weltweiter Markt für solche Schnurlos-Telekommunikationssysteme, trotz der weltweiten Dominanz der Mobilfunkgeräte (GSM-Handapparate oder demnächst UMTS-Handapparate) auch in Zukunft vorhanden sein, der vielleicht aber, insbesondere vor dem Hintergrund von derzeit diskutierten WLAN- bzw. IEEE802.11-Anwendungsszenarien sogar größer werden könnte. Das derzeit zumindest in Europa am weit verbreitetste Protokoll, auf dem solche Schnurlos-Telekommunikationssysteme basieren, ist das DECT-Protokoll.

Damit man mit solchen aus zwei Geräten (Basisstation und Mobilteil) bestehenden Schnurlos-Telekommunikationssystemen auch drahtlose mobile Telekommunikation betreiben kann, müssen die beiden Geräte miteinander "verheiratet" werden. Dies geschieht dadurch, dass das Mobilteil an der Basisstation angemeldet wird. Wie eine solche Anmeldeprozedur, insbesondere für DECT-spezifische Schnurlos-Telekommunikationssysteme, abläuft, ist in der EP 0 667 078 B1 ausführlich beschrieben.

Während einer solchen Anmeldeprozedur oder auch im Vorfeld der Anmeldeprozedur, dem Herstellen der Anmeldebereitschaft, musste der Benutzer des Schnurlos-Telekommunikationssystems bislang immer tätig werden und z.B. ein persönliches Identifikationswort, die sogenannte PIN, eingeben oder ein INTERNNummer für das Mobilteil auswählen oder die Basisstation durch Betätigen einer Anmeldetaste anmeldebereit schalten. Diese Maßnahmen sind nicht gerade bedienungsfreundlich, so dass man als Hersteller solcher Schnurlos-Telekommunikationssysteme die Anmeldeprozedur bereits im Herstellungsprozess durchgeführt hat. Dadurch wurde zwar die Bedienungsfreundlichkeit für den Käufer solcher Schnurlos-Telekommunikationssysteme verbessert, aber es wurden auch gleichzeitig die Herstellungskosten erhöht.

Um nun letzteres nicht tun zu müssen (Erhöhung der Herstellkosten), ohne dabei das erste zu unterlassen (Verbesserung der Bedienungsfreundlichkeit), ist es aus der DE 100 00 963 A1 bekannt, ein Mobilteil an einer Basisstation automatisch anzumelden. So wird zunächst zum Anmelden des Mobilteils an der Basisstation die Anmeldebereitschaft der Basisstation hergestellt. Dann ist es vorgesehen, dass zwischen der Basisstation und dem Mobilteil ein synchrones oder quasisynchrones Betriebsereignis zur Ermittlung jeweils eines Betriebs-Bezugszeitpunkts der Basisstation und des Mobilteils dient, dass die ermittelten Betriebs-Bezugszeitpunkte miteinander verglichen werden und dass die Basisstation das anzumeldende 5 Mobilteil akzeptiert, wenn der Unterschied (Δt) der Betriebs-Bezugszeitpunkte innerhalb eines vorgebbaren Bereichs liegt.

Dadurch ist es möglich, das Mobilteil automatisch, das heißt ohne Bedienfeldeingabe für die eigentliche Anmeldeprozedur durch den Nutzer, an der Basisstation anzumelden. Dadurch, dass der gemeinsame Bezugszeitpunkt ermittelt wird, ist das automatische Anmelden außerdem abgesichert, das heißt, dass ein unberechtigtes Mobilteil nicht ohne weiteres an der Basisstation angemeldet werden kann, da dieses Mobilteil keinen gemeinsamen Bezugszeitpunkt mit dieser Basisstation besitzt.

Der gemeinsame Betriebs-Bezugszeitpunkt kann nur zwischen einer Basisstation und einem Mobilteil ermittelt werden, bei denen das Betriebsereignis synchron oder quasisynchron auftritt. Unter einem synchronen Betriebsereignis wird im Zuge dieser Anmeldung ein Ereignis verstanden, welches gleichzeitig sowohl an der Basisstation als auch an dem Mobilteil einbeziehungsweise auftritt. Ein derartiges synchrones Betriebsereignis kann beispielsweise das Aktivieren einer für Basisstation und Mobilteil gemeinsamen Energieversorgungseinrichtung sein.

DE 197 40 934 Al beschreibt ein Verfahren zum Anmelden eines Mobilteils an einer Basisstation und Kommunikationssystem. Dieses Verfahren wird erst dann gestartet wenn das Mobilteil auf der Basisstation aufgelegt wird und beinhaltet das Erkennen einer Anmeldesituation, die Erzeugung eines Identifikators, die Übertragung des Identifikators über eine Funkverbindung zwischen dem Mobilteil und der Basisstation und die Übertragung einer Bestätigung über eine lokale Verbindung zwischen dem Mobilteil und der Basisstation. Ein Kommunikationssystem ist zur Durchführung des Verfahrens vorgesehen.

WO 99/31859 beschreibt die Initialisierung eines Handapparates für ein sicheres schnurloses Telefonsystem mit mehreren Leitungen, umfassend einer Funk-Fernsprechanlage mit einem oder mehreren Handapparaten und einer Basisstation. Jedes der Handapparate umfasst einen Handapparat-Sendeempfänger und die Basisstation umfasst einen Basisstation-Sendeempfänger und eine Andockstation, welche mit einer Schnittstelle elektrisch verbunden ist. Die Basisstation kommuniziert digital über einen RF-Kanal mit jedem der Handapparate.

Die digitale Kommunikation erfolgt über den Handapparat-Sendeempfänger jedes der Handapparate und das nur falls der Handapparat zuvor durch die Basisstation initialisiert wurde. Der Handapparat wird mittels der elektrisch verbunden Schnittstelle initialisiert, falls es über die Andockstation mit der Basisstation angedockt wird.

Die der Erfindung zugrundeliegende Aufgabe besteht darin, das Anmelden von akkubetriebenen Mobilteilen an Basisstationen mit einer Akkuladeeinrichtung von Telekommunikationssystemen zur drahtlosen Telekommunikation dahingehend zu verbessern, dass die hierfür notwendige Anmeldebereitschaft zwischen dem anzumeldenden Mobilteil und der Basisstation automatisch hergestellt wird, ohne dass der Benutzer des Telekommunikationssystems die vorstehend beschriebenen Maßnahmen durchzuführen braucht.

Diese Aufgabe wird ausgehend von dem im Oberbegriff des Patentanspruches 1 definierten Verfahren durch die im Kennzeichen des Patentanspruches 1 angegebenen Merkmale gelöst.

Außerdem wird die Aufgabe ausgehend von dem im Oberbegriff des Patentanspruches 8 definierten akkubetriebenen Mobilteil durch die im Kennzeichen des Patentanspruches 8 angegebenen Merkmale gelöst.

Darüber hinaus wird die Aufgabe ausgehend von dem im Oberbegriff des Patentanspruches 13 definierten Telekommunikationssystem durch die im Kennzeichen des Patentanspruches 13 angegebenen Merkmale gelöst.

Die der Erfindung zugrundeliegende Idee besteht darin, die Anmeldebereitschaft zum Anmelden eines akkubetriebenen Mobilteils an einer Basisstation mit einer Akkuladeeinrichtung eines Telekommunikationssystems zur drahtlosen Telekommunikation über Ladekontakte des Mobilteils und der Basisstation herzustellen und dann die Anmeldeprozedur wie gehabt über die Luftschnittstelle des Telekommunikationssystems ablaufen zu lassen.

Im Unterschied zu der aus der DE 100 00 963 Al bekannten technischen Lehre, ist es bei der erfindungsgemäßen Lehre nicht mehr erforderlich, ein synchrones oder quasisynchrones Betriebsereignis zwischen Mobilteil und Basisstation zur Ermittlung eines gemeinsamen Betriebs-Bezugszeitpunktes zu haben. Bei der erfindungsgemäßen Lehre kann der Benutzer des Telekommunikationssystems, die Basisstation erst einmal ans Stromnetz anschließen und dann zeitversetzt (und nicht wie bei der bekannten Lehre im wesentlichen zeitgleich) das Mobilteil mit Strom versorgen, z.B. durch Ablegen in der Akkuladeeinrichtung. Dadurch kann die Bedienungsfreundlichkeit von Telekommunikationssystemen der eingangs genannten Art nochmals verbessert werden.

Vorteilhafte Weiterbildungen der Erfindung sind in den Unteransprüchen angegeben.

Die Weiterbildung der Erfindung gemäß der Ansprüche 2 bis 4, Ansprüche 9 und 10 sowie Ansprüche 14 und 15, Zeitstempel in dem Mobilteil und der Basisstation zu erzeugen und diese dann zu vergleichen, hat den Vorteil, dass dadurch eine eindeutige Zuordnung von Basisstation und Mobilteil gewährleistet ist. Dadurch wird weiterhin vermieden, dass sich zwei Mobilteile überkreuz an zwei Basisstationen anmelden können. Jede Basisstation und jedes Mobilteil haben einen identischen Zeitstempel. Darüber hinaus erfolgt die Anmeldung des Mobilteils nahezu sicher an der richtigen Basisstation.

Die Weiterbildung der Erfindung gemäß dem Anspruch 6, Anspruch 11 sowie Anspruch 17, Erfassen des Ladestromes anhand von Istwerten und Vergleichen der Istwerte mit einem Sollwert, bietet den Vorteil, dass, falls die Basisstation mindestens eine aktive Verbindung zwischen einem Mobilteil und einem externen Telekommunikationsteilnehmer (z.B. ankommendes oder abgehendes Gespräch) abwickelt, während ein anders Mobilteil sich anmelden möchte, die aktive Verbindung priorisiert wird.

Die Weiterbildung der Erfindung gemäß dem Anspruch 7, Anspruch 12 sowie Anspruch 18, Sicherstellen, dass die Anzeigevorrichtung (Display) im Ruhezustand -also die Anzeigen auf der Vorrichtung infolge von Tastatureingaben nicht wechseln, trägt in vorteilhafter Weise dazu bei, dass der Benutzter, falls er doch mal auf der Tastatur spielen sollte durch die parallele automatische Anmeldung mit den dadurch bedingten Anzeigewechseln auf dem Display nicht verwirrt wird und womöglich denkt, das Gerät sei defekt.

Weitere vorteilhafte Weiterbildungen sind in den übrigen Unteransprüchen angegeben.

Ein Ausführungsbeispiel der Erfindung wird anhand der FIGUREN 1 bis 7 erläutert. Es zeigen:
FIGUR 1 Prinzipschaltbild eines akkubetriebenes Mobilteils und einer Basisstation mit Akkuladevorrichtung, wobei das Mobilteil der Akkuladevorrichtung noch nicht zugeführt ist,
FIGUR 2 Prinzipschaltbild eines akkubetriebenes Mobilteils und einer Basisstation mit Akkuladevorrichtung, wobei das Mobilteil der Akkuladevorrichtung zugeführt ist und ein Stabilisierungsladen des Mobilteils erfolgt,
FIGUR 3 Prinzipschaltbild eines akkubetriebenes Mobilteils und einer Basisstation mit Akkuladevorrichtung, wobei das Mobilteil der Akkuladevorrichtung zugeführt ist und der Basisstation seine Anmeldebereitschaft mitteilt,
FIGUR 4 Prinzipschaltbild eines akkubetriebenes Mobilteils und einer Basisstation mit Akkuladevorrichtung, wobei das Mobilteil der Akkuladevorrichtung zugeführt ist und die Basisstation dem Mobilteil ihre Anmeldebereitschaft mitteilt,
FIGUR 5 Prinzipschaltbild eines akkubetriebenes Mobilteils und einer Basisstation mit Akkuladevorrichtung, wobei das Mobilteil der Akkuladevorrichtung zugeführt ist und die Anmeldebereitschaft zwischen Mobilteil und Basisstation hergestellt ist,
FIGUR 6 vom Mobilteil gesteuerter Signalverlauf an den Ladekontakten in der Akkuladeeinrichtung bei zugeführtem Mobilteil,
FIGUR 7 von der Basisstation gesteuerter Signalverlauf an den Ladekontakten in der Akkuladeeinrichtung bei zugeführtem Mobilteil.

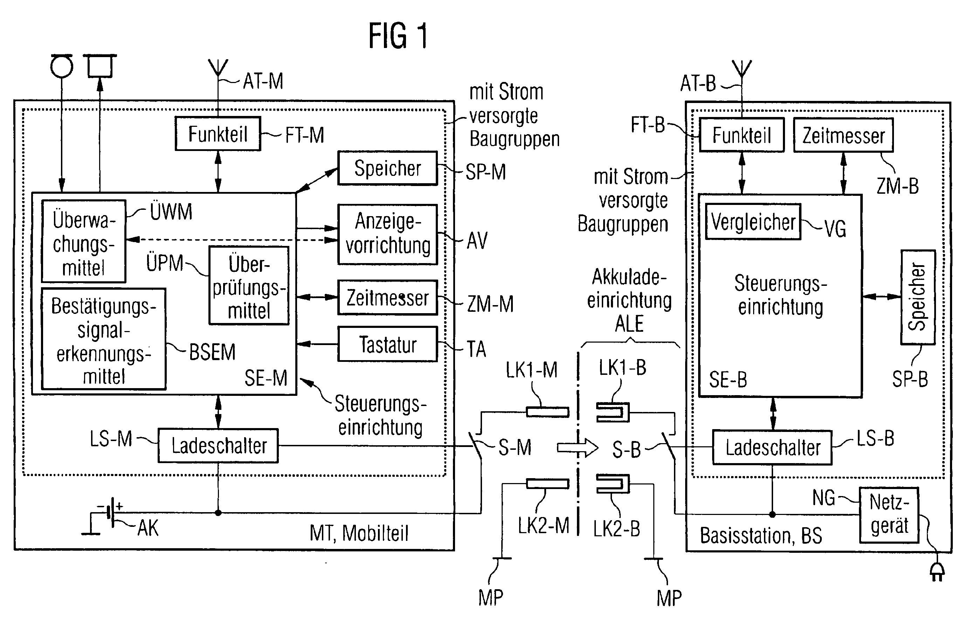

FIGUR 1 zeigt das Prinzipschaltbild eines Schnurlos-Telekommunikationssystem zur drahtlosen Telekommunikation bestehend aus einem akkubetriebenen Mobilteil MT und einer Basisstation BS mit einer Akkuladeeinrichtung ALE. Die Akkuladeeinrichtung ALE besteht aus einer Aufnahme für das akkubetriebene Mobilteil MT, wenn dieses zum Laden eines Akkumulators AK in dem Mobilteil MT der Akkuladeeinrichtung ALE zugeführt wird. Die Aufnahme weist in dem Bereich, wo das Aufladen des Mobilteilakkus stattfinden soll zwei der Basisstation BS zugeordnete Ladekontakte, einen ersten Ladekontakt LK1-B und einen zweiten Ladekontakt LK2-B, auf. Die Verbindung der Ladekontakte LK1-B, LK2-B zur Basisstation BS erfolgt über einen ersten Schalter S-B, der von einem ersten Ladeschalter LS-B in der Basisstation BS geöffnet und wieder geschlossen werden kann. Ladeschalter LS-B und Schalter S-B bilden eine Schalteinrichtung der Basisstation BS. Während die Ladekontakte LK1-B, LK2-B in der FIGUR 1 dargestellt sind, ist auf die Darstellung der Aufnahme, weil für das Wesen der zu beschreibenden Erfindung unwesentlich, verzichtet worden.

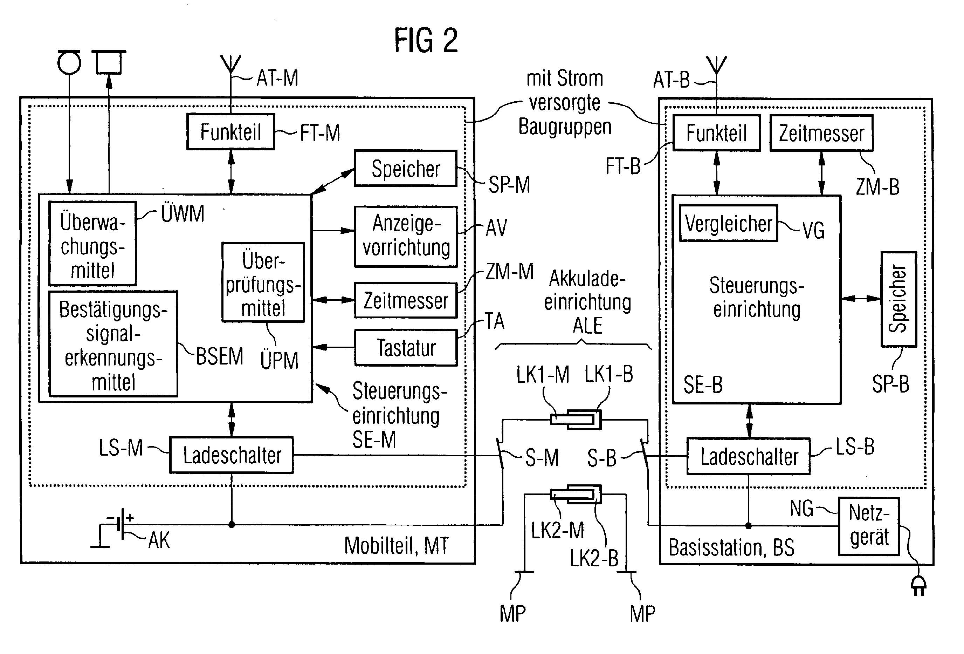

Wenn das Mobilteil MT nun der Akkuladeeinrichtung ALE zugeführt wird, wobei das Zuführen je nach Ausgestaltung der Aufnahme beispielsweise ein waagerechtes Legen, ein senkrechtes Stellen oder ein schräges (teilweise senkrecht und teilweise waagerecht) Legen bzw. Stellen sein kann, - dies ist in FIGUR 1 durch den Pfeil dargestellt - dann werden zwei dem Mobilteil MT zugeordnete Ladekontakte, ein erster Ladekontakt LK1-M und eine zweiter Ladekontakt LK2-M, mit den der Basisstation BS zugeordneten Ladekontakten LK1-B, LK2-B verbunden. Dieser Zustand ist in den FIGUREN 2 bis 5 dargestellt. Die Verbindung der Ladekontakte LK1-M, LK2-M zum Mobilteil MT erfolgt über einen zweiten Schalter S-M, der von einem zweiten Ladeschalter LS-M in dem Mobilteil MT geöffnet und wieder geschlossen werden kann. Ladeschalter LS-M und Schalter S-M bilden eine Schalteinrichtung des Mobilteils MT.

Damit nun der Akkumulator AK in dem Mobilteil MT aufgeladen werden kann, ist auf der Mobilteilseite dieser über den Schalter S-M mit dem Ladekontakt LK1-M verbunden, während auf der Basisstationsseite ein Netzgerät NG über den Schalter S-B mit dem Ladekontakt LK1-B verbunden ist. Die Ladekontakte LK2-M, LK2-B haben, damit überhaupt eine Ladestromkreis entsteht jeweils eine Verbindung zum Massepotential MP.

Die Aufladung des Akkumulators AK in dem Mobilteil MT erfolgt gewöhnlich dann, wenn dieser zum ersten Mal in Betrieb genommen werden soll, weil dieser im "jungfräulichen" Zustand (im Auslieferungszustand) normalerweise leer ist, oder wenn die bei einem Gebrauch des Akkumulators AK entnommene Energie wieder hinzugefügt werden, der Akkumulator AK also wieder aufgeladen werden soll. Der Akkumulator AK versorgt sämtliche stromverbrauchenden Baugruppen des Mobilteils MT mit Energie bzw. Strom. Zu diesen Baugruppen gehören gemäß dem Prinzipschaltbild eines Mobilteil nach FIGUR 1 neben dem bereits erwähnten Ladeschalter LS-M eine erste Steuerungseinrichtung SE-M, ein erstes Funkteil FT-M, ein erster Speicher SP-M, eine Anzeigevorrichtung AV, ein erster Zeitmesser ZM-M und eine Tastatur TA. Letztere ist natürlich nur dann ein Stromverbraucher, wenn die Tastatur TA beleuchtete Tasten enthält. Diese genannten Baugruppen sind hierzu in der FIGUR 1 durch eine punktierte Umrandung zusammengefasst. Die aufgezählten und dargestellten Baugruppen, Bauteile, Module oder Einheiten ist selbstverständlich nicht abschließend. Das Mobilteil enthält durch aus noch weitere Baugruppen, Bauteile, Module oder Einheiten, die aber für das Wesen der Erfindung nicht von Bedeutung und daher auch nicht dargestellt sind. Die genannten Baugruppen, Bauteile, Module oder Einheiten sind in der dargestellten Weise miteinander verbunden und an den Akkumulator AK angeschlossen.

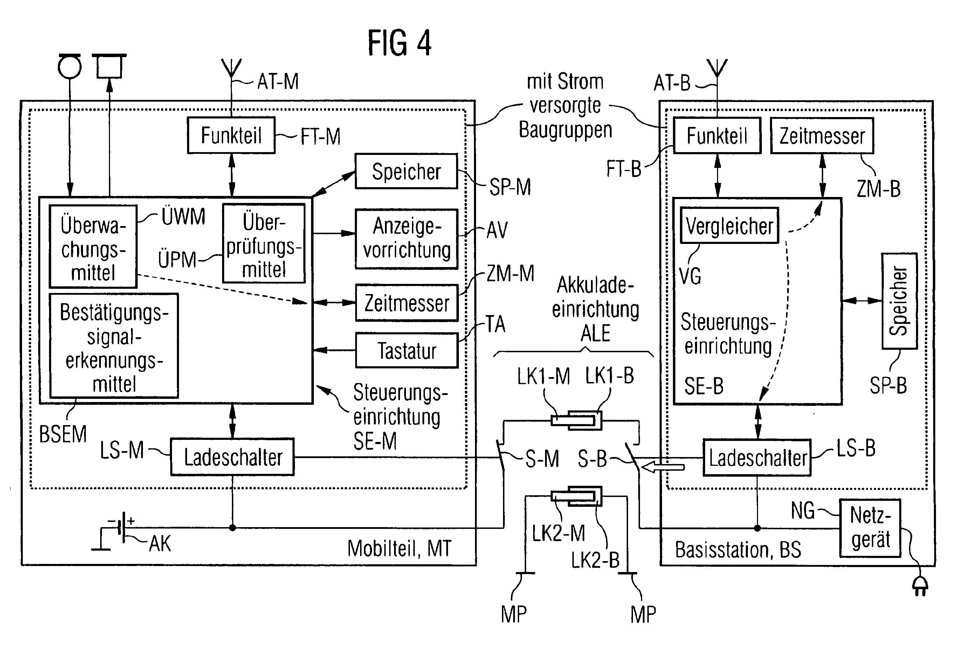

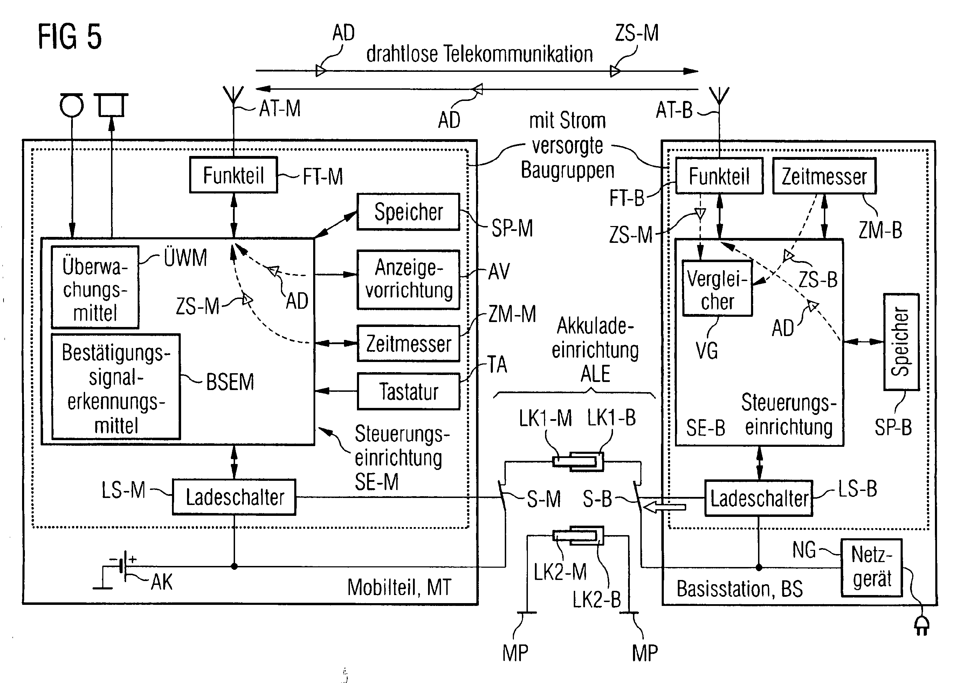

In der Steuerungseinrichtung SE-M sind gemäß FIGUR 1 Überwachungsmittel ÜWM, Überprüfungsmittel ÜPM und Bestätigungssignalerkennungsmittel BSEM enthalten, deren Bedeutung für das Ausführungsbeispiel der Erfindung im weiteren (im Fall der Überwachungsmittel ÜWM im Verlauf der Beschreibung der FIGUR 1, im Fall der Überprüfungsmittel ÜPM im Verlauf der Beschreibung der FIGUR 2 und im Fall der Bestätigungssignalerkennungsmittel BSEM im Verlauf der Beschreibung der FIGUREN 4 und 5) erläutert wird. Darüber hinaus ist die Steuerungseinrichtung SE-M - wie in FIGUR 1 dargestellt - mit einem Mikrofon MF und einer Hörkapsel HK verbunden.

Zur drahtlosen Telekommunikation des Mobilteils MT mit der Basisstation BS ist das Funkteil FT-M mit einer ersten Antenne AT-M verbunden.

Die Basisstation BS wird zur Strom- bzw. Energieversorgung im Unterschied zum Mobilteil MT nicht von einem Akkumulator, sondern von dem bereits erwähnten Netzgerät NG gespeist. Das Netzgerät NG versorgt sämtliche stromverbrauchenden Baugruppen der Basisstation BS mit Energie bzw. Strom. Zu diesen Baugruppen gehören gemäß dem Prinzipschaltbild einer Basisstation nach FIGUR 1 neben dem bereits erwähnten Ladeschalter LS-B eine zweite Steuerungseinrichtung SE-B, ein zweites Funkteil FT-B, ein zweiter Speicher SP-B und ein zweiter Zeitmesser ZM-B. Diese genannten Baugruppen sind hierzu in der FIGUR 1 wieder durch eine punktierte Umrandung zusammengefasst. Die aufgezählten und dargestellten Baugruppen, Bauteile, Module oder Einheiten ist selbstverständlich nicht abschließend. Die Basisstation enthält durch aus noch weitere Baugruppen, Bauteile, Module oder Einheiten, die aber für das Wesen der Erfindung nicht von Bedeutung und daher auch nicht dargestellt sind. Die genannten Baugruppen, Bauteile, Module oder Einheiten sind in der dargestellten Weise miteinander verbunden und an das Netzgerät NG angeschlossen.

In der Steuerungseinrichtung SE-B ist gemäß FIGUR 1 ein Vergleicher VG enthalten, dessen Bedeutung für das Ausführungsbeispiel der Erfindung im weiteren im Verlauf der Beschreibung der FIGUR 5 erläutert wird.

Zur drahtlosen Telekommunikation der Basisstation BS mit dem Mobilteil MT ist das Funkteil FT-B mit einer zweiten Antenne AT-B verbunden.

Gegenstand des Ausführungsbeispieles der Erfindung ist Anmelden von akkubetriebenen Mobilteilen an Basisstationen mit einer Akkuladeeinrichtung von Telekommunikationssystemen zur drahtlosen Telekommunikation. Dieser Vorgang lässt sich prinzipiell in zwei Phasen unterteilen:
Phase 1: Herstellen der Anmeldebereitschaft von Mobilteil MT und Basisstation BS über die Ladekontakte LK1-M, LK2-M, LK1-B, LK2-B, wenn das Mobilteil MT der Akkuladeeinrichtung ALE zugeführt ist
Phase 2: Durchführen der eigentlichen Anmeldung in bekannter Weise über die Luftschnittelle des Telekommunikationssystems

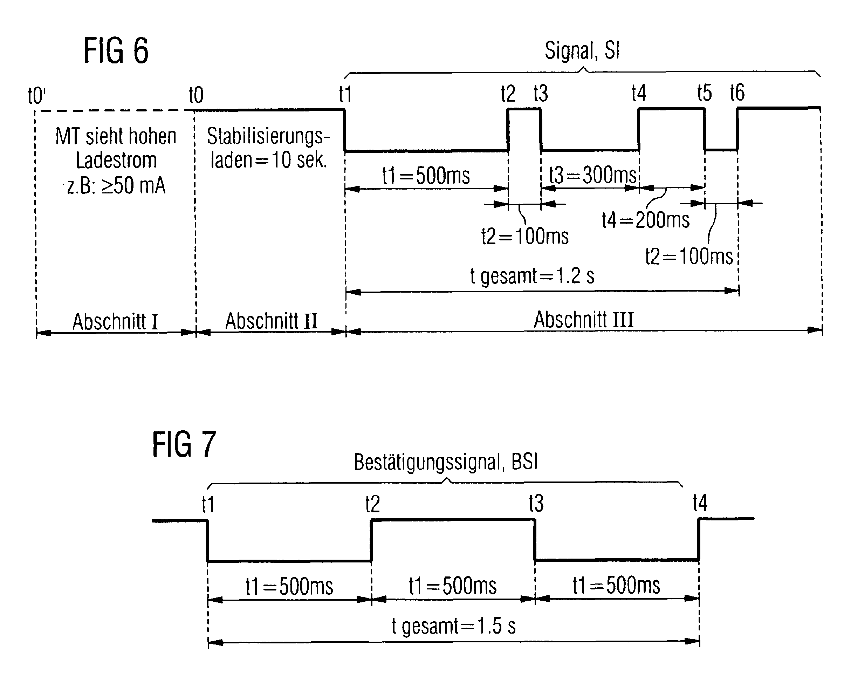

Phase 1 wird anhand der FIGUREN 1 bis 5 iVm der FIGUREN 6 und 7 detailliert erläutert, während auf Phase 2 nur kurz mit der Beschreibung der FIGUR 5 eingegangen wird

Der erste Schritt zum Herstellen der Anmeldebereitschaft ist gemäß der Definition der Phase 1 das Zusammenführen von Mobilteil MT und Basisstation BS, indem das Mobilteil MT der Akkuladeeinrichtung ALE zugeführt wird. Dieser Schritt wird in FIGUR 1 wie bereits erwähnt durch den Pfeil dargestellt. In den FIGUREN 2 bis 5 ist dieser Schritt bereits vollzogen.

Ist das Mobilteil MT der Akkuladeeinrichtung ALE zugeführt worden, so ist es unter Umständen zweckmäßig zu klären, ob das Mobilteil MT, das sich in der Akkuladeeinrichtung ALE befindet noch gar nicht angemeldet werden soll, weil der Benutzer, während das Mobilteil sich in der Akkuladeeinrichtung ALE befindet, noch auf der Tastatur TA Tasten bedient, die zur Folge haben, dass sich die Anzeigen auf der Anzeigevorrichtung AV bzw. dem Display verändern, um vielleicht noch etwas am Mobilteil auszuprobieren, bevor er es anmelden möchte. Um hier Klarheit zu bekommen und keine Konfusion beim Benutzer hervorzurufen, wenn infolge der automatischen Anmeldung ebenfalls Änderungen der Displayanzeige auftreten, ist es vorteilhaft, wenn überwacht wird, ob die Anzeigevorrichtung AV im Ruhezustand ist. Diese Überwachung wird von den Überwachungsmitteln ÜWM in der Steuerungseinrichtung SE-M des Mobilteils MT durchgeführt.

FIGUR 2 zeigt das Prinzipschaltbild des Schnurlos-Telekommunikationssystem zur drahtlosen Telekommunikation bestehend aus dem akkubetriebenen Mobilteil MT und der Basisstation BS mit der Akkuladeeinrichtung ALE, bei dem der erste Schritt zum Herstellen der Anmeldebereitschaft abgeschlossen ist und bei dem jetzt in einem zweiten Schritt sichergestellt werden muss, dass im Akkumulator AK überhaupt genügend Energie vorhanden ist, damit das Mobilteil MT die Anmeldung überhaupt durchführen kann und in einem dritten Schritt geklärt werden muss, ob das Mobilteil noch anzumelden ist oder nur aufzuladen ist.

Die Akkuladeeinrichtung ALE besteht wieder aus der Aufnahme für das akkubetriebene Mobilteil MT, wenn dieses zum Laden eines Akkumulators AK in dem Mobilteil MT der Akkuladeeinrichtung ALE zugeführt wird. Die Aufnahme weist in dem Bereich, wo das Aufladen des Mobilteilakkus stattfinden soll wieder die Ladekontakte LK1-B, LK2-B auf. Die Verbindung der Ladekontakte LK1-B, LK2-B zur Basisstation BS erfolgt über den Schalter S-B, der von dem Ladeschalter LS-B in der Basisstation BS geöffnet und wieder geschlossen werden kann.

Dadurch, ,dass das Mobilteil MT nun der Akkuladeeinrichtung ALE zugeführt ist, sind die dem Mobilteil MT zugeordnete Ladekontakte LK1-M, LK2-M mit den der Basisstation BS zugeordneten Ladekontakten LK1-B, LK2-B verbunden. Die Verbindung der Ladekontakte LK1-M, LK2-M zum Mobilteil MT erfolgt wieder über den Schalter S-M, der von dem Ladeschalter LS-M in dem Mobilteil MT geöffnet und wieder geschlossen werden kann.

Der Akkumulator AK in dem Mobilteil MT wird wieder von Netzgerät NG aufgeladen.

Der Akkumulator AK versorgt wieder sämtliche stromverbrauchenden Baugruppen des Mobilteils MT mit Energie bzw. Strom. Zu diesen Baugruppen gehören wieder neben dem Ladeschalter LS-M die Steuerungseinrichtung SE-M mit den Überwachungsmitteln ÜWM, den Überprüfungsmitteln ÜPM und den Bestätigungssignalerkennungsmitteln BSEM, das Funkteil FT-M mit der Antenne AT-M, der Speicher SP-M, die Anzeigevorrichtung AV, der Zeitmesser ZM-M und die Tastatur TA.

Die Basisstation BS wird wieder zur Strom- bzw. Energieversorgung im Unterschied zum Mobilteil MT von Netzgerät NG gespeist. Das Netzgerät NG versorgt sämtliche stromverbrauchenden Baugruppen der Basisstation BS mit Energie bzw. Strom. Zu diesen Baugruppen gehören wieder neben dem Ladeschalter LS-B die Steuerungseinrichtung SE-B mit dem Vergleicher VG, das Funkteil FT-B mit der Antenne AT-B, der Speicher SP-B und der Zeitmesser ZM-B.

Um sicherzustellen, dass genügend Energie im Akkumulator enthalten ist, müsste normalerweise die gespeicherte Energie im Akkumulator AK zu diesem Zweck gemessen werden. Wenn der Akkumulator AK zum ersten zum Einsatz kommt, erübrigt sich so eine Messung, da der Akkumulator AK in der Regel leer ist. In diesem Fall muss der Akkumulator AK also zumindest geringfügig geladen werden, damit die automatische Anmeldung von Seiten des Mobilteils MT stabil durchgeführt werden kann. Anders sieht es aus, wenn der Akkumulator AK schon mal benutzt worden ist. Hier wäre ein Messung angebracht, um sicher zu sein, das genügend Energie vorhanden ist. Da, wenn der erste Fall vorliegt, sowieso geladen werden muss, ist es zweckmäßig immer zu laden. Dies ist der Grund das vorzugsweise für eine gewisse, vorzugsweise einzustellende, Zeitdauer t0-t1 gemäß Signalverlaufabschnitt II in FIGUR 6 ein Stabilisierungsladen durchgeführt wird. Während dieser Zeit fließt ein Ladestrom LST über die Ladekontakte LK1-M, LK2-M, LK1-B, LK2-B in den Akkumulator AK. Die Zeitdauer kann dabei in der Steuerungseinrichtung SE-M softwaremäßig eingestellt werden, sodass diese dann die Schalteinrichtung LS-M, S-M veranlasst, die Verbindung vom Netzgerät NG zum Akkumulator AK durch Öffnen des Schalters S-M zu unterbrechen.

Bei der automatischen Anmeldung über die Ladekontakte muss zwischen zwei Betriebszuständen unterschieden werden:
Zustand 1: Mobilteil in der Akkuladeeinrichtung ALE ist ein Mobilteil, dass noch nicht an der Basisstation BS angemeldet ist.
Zustand 2: Mobilteil in der Akkuladeeinrichtung ALE ist ein Mobilteil, dass schon angemeldet ist, aber lediglich zum Aufladen des Akkumulators in der Akkuladeeinrichtung ALE ist.

Um zu verhindern, dass nur Mobilteile gemäß Zustand 1 automatisch angemeldet werden, muss überprüft werden, ob sich ein solches Mobilteil in der Akkuladeeinrichtung ALE befindet. Dies wird dadurch erreicht, dass die hierfür vorgesehenen Überprüfungsmittel ÜPM, überprüfen, ob in dem Speicher SP-M bereits Anmeldedaten gespeichert sind. Ist das der Fall, dann handelt es sich bei dem Mobilteil in der Akkuladeeinrichtung ALE um eine Mobilteil gemäß Zustand 2.

Für den Fall, dass das in der Basisstation BS verwendete Netzgerät NG nicht dafür ausgelegt ist, die Basisstation BS, an der mehrere Mobilteile betrieben werden können, mit soviel Energie zu versorgen, dass diese gleichzeitig für ein erstes Mobilteil die automatische Anmeldung über die Ladekontakte durchführen und für ein zweites Mobilteil eine aktive Verbindung zwischen diesem Mobilteil und einem externen Telekommunikationsteilnehmer (z.B. ankommendes oder abgehendes Gespräch) abwickeln kann, ist es zweckmäßig eine Priorisierung für die aktive Verbindung vorzunehmen. Dies wird dadurch erreicht, dass die Steuerungseinrichtung SE-M über den Ladeschalter LS-M der Schalteinrichtung LS-M, S-M einen Istwert des Ladestroms LST, der in der Verbindung zwischen dem Mobilteil MT und der Basisstation BS über die Ladekontakte LK1-M, LK2-M, LK1-B, LK2-B fließt, erfasst und, wenn dieser Istwert kleiner als ein vorgegebener Sollwert z.B. 50 mA, des Ladestroms LST ist, das Herstellen der Anmeldebereitschaft solange unterbrochen wird bis der erfasste Istwert gleich oder größer als der Sollwert ist. Dies ist im Signalverlaufabschnitt I mit der Zeitdauer von t0'-t0 in FIGUR 6 dargestellt.

Die Priorisierung bietet sich zum Zeitpunkt der Durchführung beiden Schritte (zweiter Schritt und dritter Schritt) an, weil hier zu einem frühen Zeitpunkt beim Herstellen der Anmeldebereitschaft erstmalig der Ladestrom LST fließt.

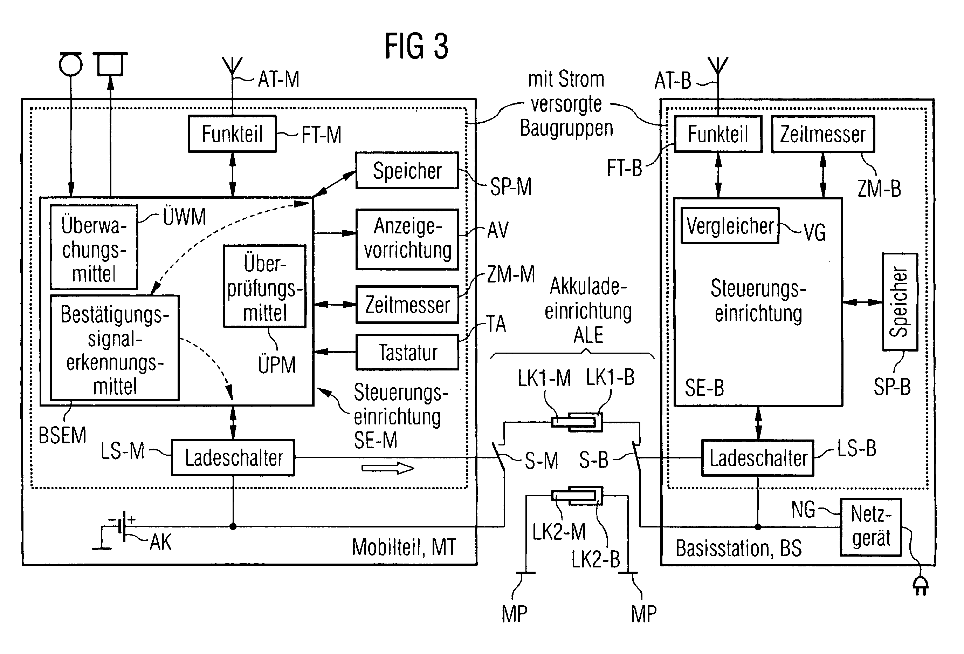

Die FIGUREN 3 und 4 zeigen jeweils das Prinzipschaltbild des Schnurlos-Telekommunikationssystem zur drahtlosen Telekommunikation bestehend aus dem akkubetriebenen Mobilteil MT und der Basisstation BS mit der Akkuladeeinrichtung ALE, bei dem die ersten drei Schritte zum Herstellen der Anmeldebereitschaft abgeschlossen sind und bei dem jetzt in einem vierten letzten Schritt für das Herstellen der Anmeldebereitschaft das gegenseitige Signalisieren der Anmeldebereitschaft von Mobilteil und Basisstation durchgeführt wird.

Die Akkuladeeinrichtung ALE besteht wieder aus der Aufnahme für das akkubetriebene Mobilteil MT, wenn dieses zum Laden eines Akkumulators AK in dem Mobilteil MT der Akkuladeeinrichtung ALE zugeführt wird. Die Aufnahme weist in dem Bereich, wo das Aufladen des Mobilteilakkus stattfinden soll wieder die Ladekontakte LK1-B, LK2-B auf. Die Verbindung der Ladekontakte LK1-B, LK2-B zur Basisstation BS erfolgt über den Schalter S-B, der von dem Ladeschalter LS-B in der Basisstation BS geöffnet und wieder geschlossen werden kann.

Dadurch, ,dass das Mobilteil MT nun der Akkuladeeinrichtung ALE zugeführt ist, sind die dem Mobilteil MT zugeordnete Ladekontakte LK1-M, LK2-M mit den der Basisstation BS zugeordneten Ladekontakten LK1-B, LK2-B verbunden. Die Verbindung der Ladekontakte LK1-M, LK2-M zum Mobilteil MT erfolgt wieder über den Schalter S-M, der von dem Ladeschalter LS-M in dem Mobilteil MT geöffnet und wieder geschlossen werden kann.

Der Akkumulator AK in dem Mobilteil MT wird wieder von Netzgerät NG aufgeladen.

Der Akkumulator AK versorgt wieder sämtliche stromverbrauchenden Baugruppen des Mobilteils MT mit Energie bzw. Strom. Zu diesen Baugruppen gehören wieder neben dem Ladeschalter LS-M die Steuerungseinrichtung SE-M mit den Überwachungsmitteln ÜWM, den Überprüfungsmitteln ÜPM und den Bestätigungssignalerkennungsmitteln BSEM, das Funkteil FT-M mit der Antenne AT-M, der Speicher SP-M, die Anzeigevorrichtung AV, der Zeitmesser ZM-M und die Tastatur TA.

Die Basisstation BS wird wieder zur Strom- bzw. Energieversorgung im Unterschied zum Mobilteil MT von Netzgerät NG gespeist. Das Netzgerät NG versorgt sämtliche stromverbrauchenden Baugruppen der Basisstation BS mit Energie bzw. Strom. Zu diesen Baugruppen gehören wieder neben dem Ladeschalter LS-B die Steuerungseinrichtung SE-B mit dem Vergleicher VG, das Funkteil FT-B mit der Antenne AT-B, der Speicher SP-B und der Zeitmesser ZM-B.

Die Signalisierung vom Mobilteil MT zur Basisstation BS wird gemäß FIGUR 3 vorzugsweise dadurch erreicht, dass die Schalteinrichtung LS-M, S-M und die Steuerungseinrichtung SE-M, die Signalerzeugungsmittel bilden, zur Erzeugung eines Signals SI die Verbindung zwischen dem Mobilteil MT und der Basisstation BS über die Ladekontakte LK1-M, LK2-M, LK1-B, LK2-B mindestens einmal durch Öffnen des Schalters S-M unterbrechen und durch Schließen des Schalters S-M wieder herstellen. Gemäß FIGUR 6 im Signalverlaufabschnitt III beträgt die Zeitdauer von t1-t2 für das erste Öffnen vorzugsweise 500ms, die Zeitdauer von t2-t3 für das erste Schließen vorzugsweise 100ms, die Zeitdauer von t3-t4 für das zweite Öffnen vorzugsweise 300ms, die Zeitdauer von t4-t5 für das zweite Schließen vorzugsweise 200ms, die Zeitdauer von t5-t6 für das dritte Öffnen vorzugsweise 100ms, bevor zum Zeitpunkt t6 der Schalter S-M letztmalig geschlossen wird.

Die Signalisierung von der Basisstation BS zum Mobilteil MT wird gemäß FIGUR 4 vorzugsweise dadurch erreicht, dass die Schalteinrichtung LS-B, S-B und die Steuerungseinrichtung SE-B, die Signalerzeugungsmittel bilden, zur Erzeugung eines Bestätigungssignals BSI die Verbindung zwischen dem Mobilteil MT und der Basisstation BS über die Ladekontakte LK1-M, LK2-M, LK1-B, LK2-B mindestens einmal durch Öffnen des Schalters S-B unterbrechen und durch Schließen des Schalters S-B wieder herstellen. Gemäß FIGUR 7 beträgt die Zeitdauer von t1-t2 für das erste Öffnen vorzugsweise 500ms, die Zeitdauer von t2-t3 für das erste Schließen vorzugsweise 500ms und die Zeitdauer von t3-t4 für das zweite Öffnen vorzugsweise 500ms, bevor zum Zeitpunkt t4 der Schalter S-B letztmalig geschlossen wird.

Nachdem das Mobilteil MT das Bestätigungssignal BSI mit den Mitteln zur Erkennung eines Bestätigungssignals BSEM erkannt hat, wird durch die Steuerungseinrichtung SE-M die Anmeldeprozedur gestartet wird, dies ist in FIGUR 5 dargestellt, indem die Anmeldedaten AD über die Luft übertragen werden.

Die übliche Anmeldeprozedur über die Luftschnittstelle beginnt mit einer speziellen Erstanmelde-PIN.

Beim Anmelden wird dem Mobilteil die nächste frei Internnummer zugewiesen. Wenn alle Internnummern vergeben sind, wird immer das Mobilteil mit Internnummer "INT6" überschrieben. Durch die nun eingetragene RFPI-Nummer ist eine weitere automatische Anmeldung von Mobilteilseite nicht mehr möglich.

Das Automatische Anmelden dauert insgesamt ca. 40 Sekunden. Der Benutzer braucht somit keine eigenen Eingaben, wie z.B.: PIN-Eingabe zu tätigen, um sein Mobilteil anzumelden. In der Fertigung entfällt die eindeutige Zuordnung Mobilteil <-> Basisstation, da alle Geräte unangemeldet miteinander kombinierbar sind.

FIGUR 5 zeigt iVm FIGUR 4 das Prinzipschaltbild des Schnurlos-Telekommunikationssystem zur drahtlosen Telekommunikation bestehend aus dem akkubetriebenen Mobilteil MT und der Basisstation BS mit der Akkuladeeinrichtung ALE, bei dem das Herstellen der Anmeldebereitschaft im Prinzip abgeschlossen ist und bei dem jetzt in einem optionalen fünften Schritt vermieden werden soll, dass sich zwei Mobilteile überkreuz an zwei Basisstationen anmelden können.

Die Akkuladeeinrichtung ALE besteht wieder aus der Aufnahme für das akkubetriebene Mobilteil MT, wenn dieses zum Laden eines Akkumulators AK in dem Mobilteil MT der Akkuladeeinrichtung ALE zugeführt wird. Die Aufnahme weist in dem Bereich, wo das Aufladen des Mobilteilakkus stattfinden soll wieder die Ladekontakte LK1-B, LK2-B auf. Die Verbindung der Ladekontakte LK1-B, LK2-B zur Basisstation BS erfolgt über den Schalter S-B, der von dem Ladeschalter LS-B in der Basisstation BS geöffnet und wieder geschlossen werden kann.

Dadurch, ,dass das Mobilteil MT nun der Akkuladeeinrichtung ALE zugeführt ist, sind die dem Mobilteil MT zugeordnete Ladekontakte LK1-M, LK2-M mit den der Basisstation BS zugeordneten Ladekontakten LK1-B, LK2-B verbunden. Die Verbindung der Ladekontakte LK1-M, LK2-M zum Mobilteil MT erfolgt wieder über den Schalter S-M, der von dem Ladeschalter LS-M in dem Mobilteil MT geöffnet und wieder geschlossen werden kann.

Der Akkumulator AK in dem Mobilteil MT wird wieder von Netzgerät NG aufgeladen.

Der Akkumulator AK versorgt wieder sämtliche stromverbrauchenden Baugruppen des Mobilteils MT mit Energie bzw. Strom. Zu diesen Baugruppen gehören wieder neben dem Ladeschalter LS-M die Steuerungseinrichtung SE-M mit den Überwachungsmitteln ÜWM, den Überprüfungsmitteln ÜPM und den Bestätigungssignalerkennungsmitteln BSEM, das Funkteil FT-M mit der Antenne AT-M, der Speicher SP-M, die Anzeigevorrichtung AV, der Zeitmesser ZM-M und die Tastatur TA.

Die Basisstation BS wird wieder zur Strom- bzw. Energieversorgung im Unterschied zum Mobilteil MT von Netzgerät NG gespeist. Das Netzgerät NG versorgt sämtliche stromverbrauchenden Baugruppen der Basisstation BS mit Energie bzw. Strom. Zu diesen Baugruppen gehören wieder neben dem Ladeschalter LS-B die Steuerungseinrichtung SE-B mit dem Vergleicher VG, das Funkteil FT-B mit der Antenne AT-B, der Speicher SP-B und der Zeitmesser ZM-B.

Die Vermeidung des Überkreuzanmeldens wird dadurch erreicht, dass zunächst gemäß FIGUR 4 mit dem Übertragen des Bestätigungssignal BSI die Basisstation BS die Zeitmesser ZM-M, ZM-B zur Messung einer Zeitspanne zwischen einem Anfangszeitpunkt und einem Endzeitpunkt und Erzeugung jeweils eines Zeitstempels ZS-M, ZS-B für die gemessene Zeitspanne sowohl in der Basisstation BS als auch in dem Mobilteil MT anstößt.

Aufgrund der Laufzeit des Anstoßsignals über die Ladekontakte kommt es dazu, dass die Zeitmesser ZM-M, ZM-B in der Basisstation BS und in dem Mobilteil MT zu unterschiedlichen Anfangszeitpunkten gestartet und Endzeitpunkten gestoppt werden.

Nachdem der Zeitmesser ZM-M in dem Mobilteil MT gestoppt worden ist, wird der vom Zeitmesser ZM-M des Mobilteils MT erzeugte Zeitstempel ZS-M vom Mobilteil MT zur Basisstation BS über die Luft übertragen. In der Basisstation BS wird dieser übertragene Zeitstempel ZS-M des Mobilteils MT mit dem Zeitstempel ZS-B der Basisstation BS in dem Vergleicher VG verglichen, wobei es, wenn die beiden Zeitstempel ZS-M, ZS-B sich mindestens um einen vorgegebenen Wert voneinander unterscheiden, nicht zu einer Anmeldung des Mobilteils MT an der Basisstation BS kommt.

## Patentansprüche

1. Verfahren zum Anmelden von akkubetriebenen Mobilteilen (MT) an Basisstationen (BS) mit einer Akkuladeeinrichtung (ALE) von Telekommunikationssystemen zur drahtlosen Telekommunikation, bei dem eine Anmeldebereitschaft zwischen dem anzumeldenden Mobilteil (MT) und der Basisstation (BS) hergestellt wird und bei dem eine Anmeldeprozedur -das Anmelden des Mobilteils (MT) an der Basisstation (BS), wenn diese anmeldebereit sind -durch drahtlose Telekommunikation erfolgt, wobei vorgegebene Anmeldedaten, insbesondere basisstations-, mobilteil-, system-und produktspezifische Kennungen, zwischen dem Mobilteil (MT) und der Basisstation (BS) übertragen und in Speicher (SP-M, SP-B) gespeichert werden,
**dadurch gekennzeichnet, dass**
die Anmeldebereitschaft hergestellt wird, indem
a) das anzumeldende Mobilteil (MT) der Akkuladeeinrichtung (ALE) der Basisstation (BS) zugeführt und dabei das Mobilteil (MT) mit der Basisstation (BS) über Ladekontakte (LK1-M, LK2-M, LK1-B, LK2-B) verbunden wird,
b) das anzumeldende Mobilteil (MT) zumindest bei einem leeren Akkumulator (AK) des Mobilteils (MT) für eine einzustellende Zeitdauer ein Stabilisierungsladen des Akkumulators (AK) vornimmt,
c) das anzumeldende Mobilteil (MT) überprüft, ob Anmeldedaten (AD) in dem Mobilteil (MT) gespeichert sind, wobei mit dem Herstellen der Anmeldebereitschaft fortgefahren wird, wenn keine Anmeldedaten (AD) gespeichert sind, anderenfalls wird der Vorgang zur Herstellung der Anmeldebereitschaft abgebrochen,
d) das anzumeldende Mobilteil (MT) der Basisstation (BS) über die Ladekontakte (LK1-M, LK2-M, LK1-B, LK2-B) ein Signal (SI) überträgt, mit dem es der Basisstation (BS) die mobilteilseitige Anmeldebereitschaft mitteilt, wobei das Signal (SI) erzeugt wird, indem die Verbindung zwischen dem Mobilteil (MT) und der Basisstation (BS) über die Ladekontakte (LK1-M, LK2-M, LK1-B, LK2-B) von dem Mobilteil (MT) mindestens einmal unterbrochen und wieder geschlossen wird.
e) die Basisstation (BS) erkennt das Signal (SI) und überträgt ihrerseits ein Bestätigungssignal (BSI) an das Mobilteil (MT), mit dem sie dem Mobilteil (MT) den Empfang des Signals (SI) bestätigt und die basisstationsseitige Anmeldebereitschaft mitteilt,
f) das anzumeldende Mobilteil (MT) das Bestätigungssignal (BSI) erkennt und mit der Anmeldeprozedur beginnt

2. Verfahren nach Anspruch 1, **dadurch gekennzeichnet, dass**
mit dem Übertragen des Bestätigungssignal (BSI) die Basisstation (BS) jeweils einen Zeitmesser (ZM-M, ZM-B) zur Messung einer Zeitspanne zwischen einem Anfangszeitpunkt und einem Endzeitpunkt und Erzeugung jeweils eines Zeitstempels (ZS-M, ZS-B) für die gemessene Zeitspanne sowohl in der Basisstation (BS) als auch in dem Mobilteil (MT) anstößt.

3. Verfahren nach Anspruch 2, **dadurch gekennzeichnet, dass**
mit dem Anstoßen des Zeitmessers (ZM-M, ZM∼B) dieser in der Basisstation (BS) und in dem Mobilteil (MT) zu unterschiedlichen Anfangszeitpunkten gestartet und Endzeitpunkten gestoppt wird.

4. Verfahren nach Anspruch 2 oder 3, **dadurch gekennzeichnet, dass**
nach dem Stoppen des Zeitmessers (ZM-M) in dem Mobilteil (MT) der vom Zeitmesser (ZM-M) des Mobilteils (MT) erzeugte Zeitstempel (ZS-M) vom Mobilteil (MT) zur Basisstation (BS) übertragen wird und in der Basisstation (BS) dieser übertragene Zeitstempel (ZS-M) des Mobilteils (MT) mit dem Zeitstempel (ZS-B) der Basisstation (BS) verglichen wird, wobei es, wenn die beiden Zeitstempel (ZS-M, ZS-B) sich mindestens um einen vorgegebenen Wert voneinander unterscheiden, nicht zu einer Anmeldung des Mobilteils (MT) an der Basisstation (BS) kommt.

5. Verfahren nach einem der Ansprüche 1 bis 4, **dadurch gekennzeichnet, dass** das Bestätigungssignal (BSI) erzeugt wird, indem die Verbindung zwischen dem Mobilteil (MT) und der Basisstation (BS) über die Ladekontakte (LK1-M, LK2-M, LK1-B, LK2-B) von der Basisstation (BS) mindestens einmal unterbrochen und wieder herstellen wird.

6. Verfahren nach einem der Ansprüche 1 bis 5, **dadurch gekennzeichnet, dass** das anzumeldende Mobilteil (MT) einen Istwert eines Ladestroms (LST), der in der Verbindung zwischen dem Mobilteil (MT) und der Basisstation (BS) über die Ladekontakte (LK1-M, LK2-M, LK1-B, LK2-B) fließt, erfasst und, wenn dieser Istwert kleiner als ein vorgegebener Sollwert des Ladestroms (LST) ist, das Herstellen der Anmeldebereitschaft solange unterbricht bis der erfasste Istwert gleich oder größer als der Sollwert ist.

7. Verfahren nach einem der Ansprüche 1 bis 6, **dadurch gekennzeichnet, dass** das anzumeldende Mobilteil (MT) überwacht, ob das Mobilteil (MT), bevor es der Akkuladeeinrichtung (ALE) zugeführt wird, durch den Benutzer bedient wird und somit Anzeigen auf einer Anzeigevorrichtung (AV) des Mobilteils (MT) wechseln -die Anzeigevorrichtung (AV) also nicht im Ruhezustand ist und, wenn dies der Fall ist, mit dem Herstellen der Anmeldebereitschaft nicht beginnt.

8. Akkubetriebenes Mobilteil (MT) zum Anmelden an einer Basisstation (BS) mit einer Akkuladeeinrichtung (ALE) von Telekommunikationssystemen zur drahtlosen Telekommunikation, für das mit der Basisstation (BS) eine Anmeldebereitschaft herstellbar ist und das, wenn das Mobilteil (MT) und die Basis station (BS) anmeldebereit sind, in einer Anmeldeprozedur durch drahtlose Telekommunikation an der Basisstation (BS) anmeldbar ist, wobei vorgegebene Anmeldedaten (AD), insbesondere basisstations-, mobilteil-, system-und produktspezifische Kennungen, zwischen dem Mobilteil (MT) und der Basisstation (BS) übertragen und gespeichert werden,
**dadurch gekennzeichnet, dass**
zur Herstellung der Anmeldebereitschaft
a) das Mobilteil (MT) der Akkuladeeinrichtung (ALE) der Basisstation (BS) zuführbar ist und Ladekontakte (LK1-M, LK2-M) aufweist, die in der Akkuladeeinrichtung (ALE) mit weiteren Ladekontakten (LK1-B, LK2-B) der Basisstation (BS) verbunden sind,
b) eine Schalteinrichtung (LS-M, S-M) vorhanden ist, die zumindest bei einem leeren Akkumulator (AK) sicherstellt, dass dieser für eine einzustellende Zeitdauer als Stabilisierungsladen geladen wird,
c) Mittel zum Überprüfen eines Speichers (SE-M) vorhanden sind, zum überprüfen, ob Anmeldedaten in einem Speicher (SPM) gespeichert sind,
d) die Überprüfungsmittel (ÜPM) sind derart ausgebildet und einer Steuerungseinrichtung (SE-M) zugeordnet, dass mit dem Herstellen der Anmeldebereitschaft fortgefahren wird, wenn keine Anmeldedaten gespeichert sind, anderenfalls wird der Vorgang zur Herstellung der Anmeldebereitschaft abgebrochen,
e) Mittel zur Erzeugung eines Signals (SE-M, LS-M, S-M) vorhanden sind, die mit den Ladekontakten (LK1-M, LK2-M, LK1-B, LK2-B) verbunden sind und derart ausgebildet sind, dass ein Signal (SI) erzeugt und zu der Basisstation (BS) übertragen wird, um der Basisstation (BS) die mobilteilseitige Anmeldebereitschaft mitzuteilen, wobei die Signalerzeugungsmittel (SE-M, LS-M, S-M) aus der Schalteinrichtung (LS-M, S-M) und der Steuerungseinrichtung (SE-M) besteht, die derart miteinander verbunden und ausgebildet sind, dass zur Erzeugung des Signals die Verbindung zwischen dem Mobilteil (MT) und der Basisstation (BS) über die Ladekontakte (LK1-M, LK2-M, LK1-B, LK2-B) mindestens einmal unterbrochen und wieder hergestellt wird,
f) Mittel zur Erkennung eines Bestätigungssignals (BSEM) vorhanden sind, und derart ausgebildet sind dass die, wenn die Basisstation (BS) zum Bestätigen des Empfang des Signals (SI) und zur Mitteilung der basisstationsseitigen Anmeldebereitschaft ihrerseits ein Bestätigungssignal (BSI) erzeugt und an das Mobilteil (MT) überträgt, dieses erkennen und die der Steuerungseinrichtung (SE-M) zugeordnet sind und mit dieser eine Funktionseinheit derart bilden, dass, wenn das Bestätigungssignal (BSI) erkannt ist, die Anmeldeprozedur gestartet wird.

9. Akkubetriebenes Mobilteil nach Anspruch 8, **dadurch gekennzeichnet, dass** ein Zeitmesser (ZM-M) zur Messung einer Zeitspanne zwischen einem Anfangszeitpunkt und einem Endzeitpunkt und Erzeugung eines Zeitstempels (ZS-M) für die gemessene Zeitspanne vorhanden ist, der von der Basisstation (BS) mit dem Übertragen des Bestätigungssignal (BSI) zusammen mit einem weiteren Zeitmesser (ZM-B) in der Basisstation (BS) angestoßen wird.

10. Akkubetriebenes Mobilteil nach Anspruch 9, **dadurch gekennzeichnet, dass** der Zeitmesser (ZM-M) derart ausgebildet und derart mit der Steuerungseinrichtung (SE-M), einem Funkteil (FT-M) und einer Antenne (AT-M) verbunden ist, dass nach dem Stoppen des Zeitmessers (ZM-M) der vom Zeitmesser (ZM-M) des Mobilteils 0 erzeugte Zeitstempel (ZS-M) für einen Vergleich mit einem weiteren Zeitstempel (ZS-B), der von dem Zeitmesser (ZM-B) in der Basisstation (BS) erzeugt wird, wobei es, wenn die beiden Zeitstempel (ZS-M, ZS-B) sich mindestens um einen vorgegebenen Wert voneinander unterscheiden, nicht zu einer Anmeldung des Mobilteils (MT) an der Basisstation (BS) kommt, zur Basisstation (BS) übertragen wird.

11. Akkubetriebenes Mobilteil nach einem der Ansprüche 8 bis 10, **dadurch gekennzeichnet, dass**
die Steuerungseinrichtung (SE-M) derart ausgebildet ist, dass über einen Ladeschalter (LS-M) der Schalteinrichtung (LS-M, S-M) ein Istwert eines Ladestroms (LST), der in der Verbindung zwischen dem Mobilteil (MT) und der Basisstation (BS) über die Ladekontakte (LK1-M, LK2-M, LK1-B, LK2-B) fließt, erfasst wird und, wenn dieser Istwert kleiner als ein vorgegebener Sollwert des Ladestroms (LST) ist, das Herstellen der Anmeldebereitschaft solange unterbrochen wird bis der erfasste Istwert gleich oder größer als der Sollwert ist.

12. Akkubetriebenes Mobilteil nach einem der Ansprüche 8 bis 11, **dadurch gekennzeichnet, dass**
die Steuerungseinrichtung (SE-M) Überwachungsmittel (ÜWM) aufweist, die überwachen, ob das Mobilteil (MT), bevor es der Akkuladeeinrichtung (ALE) zugeführt ist, über eine Tastatur (TA) von dem Benutzer bedient wird und somit Anzeigen auf einer Anzeigevorrichtung (AV) des Mobilteils (MT) wechseln die Anzeigevorrichtung (AV) also nicht im Ruhezustand ist und die mit der Steuerungseinrichtung (SE-M) eine Funktionseinheit derart bildet, dass, wenn die Anzeigevorrichtung (AV) nicht im Ruhezustand ist, mit dem Herstellen der Anmeldebereitschaft nicht begonnen wird.

13. Telekommunikationssystem zur drahtlosen Telekommunikation, bestehend aus mindestens einer Basisstation (BS) mit einer Akkuladeeinrichtung (ALE) und mindestens einem akkubetriebenen Mobilteil (MT), zum Anmelden des akkubetriebenen Mobilteils (MT) an der Basisstation (BS), bei dem für die Basisstation (BS) und das Mobilteil (MT) eine Anmeldebereitschaft herstellbar ist und bei dem, wenn das Mobilteil (MT) und die Basisstation (BS) anmeldebereit sind, in einer Anmeldeprozedur durch drahtlose Telekommunikation das Mobilteil (MT) an der Basisstation (BS) anmeldbar ist, wobei vorgegebene Anmeldedaten (AD), insbesondere basisstations-, mobilteil-, system und produktspezifische Kennungen, zwischen dem Mobilteil (MT) und der Basisstation (BS) übertragen und in Speicher (SP-M, SP-B) gespeichert werden,
**dadurch gekennzeichnet, dass**
zur Herstellung der Anmeldebereitschaft
a) das Mobilteil (MT) der Akkuladeeinrichtung (ALE) der Basisstation (BS) zuführbar ist und Ladekontakte (LK1-M, LK2-M) aufweist, die mit weiteren Ladekontakten (LK1-B, LK2-B) der Basisstation (BS) verbunden sind,
b) eine Schalteinrichtung (LS-M, S-M) in dem anzumeldenden Mobilteil (MT) vorhanden ist, die zumindest bei einem leeren Akkumulator (AK) sicherstellt, dass dieser für eine einzustellende Zeitdauer als Stabilisierungsladen geladen wird,
c) Mittel zum Überprüfen eines Speichers (ÜPM) in dem anzumeldenden Mobilteil (MT) vorhanden sind, zur überprüfen, ob Anmeldedaten in dem Speicher (SP-M) gespeichert sind,
d) die Überprüfungsmittel (ÜPM) sind derart ausgebildet und einer Steuerungseinrichtung (SE-M) zugeordnet, dass mit dem Herstellen der Anmeldebereitschaft fortgefahren wird, wenn keine Anmeldedaten gespeichert sind, anderenfalls wird der Vorgang zur Herstellung der Anmeldebereitschaft abgebrochen,
e) Mittel zur Erzeugung eines Signals (SE-M, LS-M, S-M) in dem anzumeldenden Mobilteil (MT) vorhanden sind, die mit den Ladekontakten (LK1-M, LK2-M, LK1-B, LK2-B) verbunden sind und derart ausgebildet sind, dass ein Signal (SI) erzeugt und zu der Basisstation (BS) übertragen wird, um der Basisstation (BS) die mobilteilseitige Anmeldebereitschaft mitzuteilen, wobei die Signalerzeugungsmittel (SE-M, LS-M, S-M) aus der Schalteinrichtung (LS-M, S-M) und der Steuerungseinrichtung (SE-M) bestehen, die derart miteinander verbunden und ausgebildet sind, dass zur Erzeugung des Signals die Verbindung zwischen dem Mobilteil (MT) und der Basisstation (BS) über die Ladekontakte (LK1-M, LK2-M, LK1-B, LK2-B) mindestens einmal unterbrochen und wieder hergestellt wird,
f) Mittel zur Erzeugung eines Bestätigungssignals (SE-B, LSB, S-B) in der Basisstation (BS) vorhanden sind, die mit den Ladekontakten (LK1-M, LK2-M, LK1-B, LK2-B) verbunden sind und derart ausgebildet sind, dass ein Bestätigungssignal (BSI) erzeugt und zu dem Mobilteil (MT) übertragen wird, um dem Mobilteil (MT) den Empfang des Signals (SI) zu bestätigen und die basisstationsseitige Anmeldebereitschaft mitzuteilen,
(g) Mittel zur Erkennung eines Bestätigungssignals (BSEM) in dem anzumeldenden Mobilteil (MT) vorhanden sind, und derart ausgebildet sind dass die das Bestätigungssignal (BSI) erkennen und die der Steuerungseinrichtung (SE-M) zugeordnet sind und mit dieser eine Funktionseinheit derart bilden, dass, wenn das Bestätigungssignal (BSI) erkannt ist, die Anmeldeprozedur gestartet wird.

14. Telekommunikationssystem nach Anspruch 13, **dadurch gekennzeichnet, dass** Zeitmesser (ZM-M, ZM-B) , eine Zeitmesser (ZM-M) im Mobilteil (MT) und ein Zeitmesser (ZM-B) in der Basisstation (BS), zur Messung einer Zeitspanne zwischen einem Anfangszeitpunkt und einem Endzeitpunkt und Erzeugung von Zeitstempeln (ZS-M, ZSB), eines in der Basisstation (BS) erzeugten Zeitstempels (ZS-B) und eines in dem Mobilteil (MT) erzeugten Zeitstempels (ZS-M), für die gemessene Zeitspanne vorhanden sind, die von der Basisstation (BS) mit dem Übertragen des Bestätigungssignal (BSI) angestoßen werden.

15. Telekommunikationssystem nach Anspruch 14, **dadurch gekennzeichnet, dass** der Zeitmesser (ZM-M) im Mobilteil (MT) derart ausgebildet und derart mit der Steuerungseinrichtung (SE-M), einem Funkteil (FT-M) und einer Antenne (AT-M) des Mobilteils (MT)verbunden ist, dass nach dem stoppen des Zeitmessers (ZMM) der vom Zeitmesser (ZM-M) des Mobilteils () erzeugte Zeitstempel (ZS-M) zur Basisstation (BS) übertragen wird und ein Vergleicher (VG) in der Basisstation (BS) vorhanden ist, der den von dem Mobilteil (MT) übertragenen Zeitstempel (ZS-M) mit dem Zeitstempel (ZS-B), der von dem Zeitmesser (ZM-B) in der Basisstation (BS) erzeugt wird, vergleicht und der einer Steuerungseinrichtung (SE-B) in der Basisstation (BS) zugeordnet ist und mit dieser eine Funktionseinheit derart bildet, dass es, wenn die beiden Zeitstempel (ZS-M, ZS-B) sich mindestens um einen vorgegebenen Wert voneinander unterscheiden, nicht zu einer Anmeldung des Mobilteils (MT) an der Basisstation (BS) kommt.

16. Telekommunikationssystem nach einem der Ansprüche 13 bis 15 , **dadurch gekennzeichnet, dass**
die Bestätigungssignalerzeugungsmittel (SE-B, LS-B, S-B) aus einer Schalteinrichtung (LS-B, S-B) in der Basisstation (BS) und einer Steuerungseinrichtung (SE-B) in der Basisstation (BS) bestehen, die derart miteinander verbunden und ausgebildet sind, dass zur Erzeugung des Bestätigungssignals (BSI) die Verbindung zwischen dem Mobilteil (MT) und der Basisstation (BS) über die Ladekontakte (LK1-M, LK2-M, LK1-B, LK2-B) von der Basisstation (BS) mindestens einmal unterbrochen und wieder hergestellt wird.

17. Telekommunikationssystem nach einem der Ansprüche 13 bis 16, **dadurch gekennzeichnet, dass**
die Steuerungseinrichtung (SE-M) in dem anzumeldenden Mobilteil (MT) derart ausgebildet ist, dass über einen Ladeschalter (LS-M) der Schalteinrichtung (LS-M, S-M) ein Istwert eines Ladestroms (LST), der in der Verbindung zwischen dem Mobilteil (MT) und der Basisstation (BS) über die Ladekontakte (LK1-M, LK2-M, LK1-B, LK2-B) fließt, erfasst wird und, wenn dieser Istwert kleiner als ein vorgegebener Sollwert des Ladestroms (LST) ist, das Herstellen der Anmeldebereitschaft solange unterbrochen wird bis der erfasste Istwert gleich oder größer als der Sollwert ist.

18. Telekommunikationssystem nach einem der Ansprüche 13 bis 17, **dadurch gekennzeichnet, dass**
die Steuerungseinrichtung (SE-M) in dem anzumeldenden Mobilteil (MT) Überwachungsmittel (ÜWM) aufweist, die überwachen, ob das Mobilteil (MT), bevor es der Akkuladeeinrichtung (ALE) zugeführt ist, über eine Tastatur (TA) von dem Benutzer bedient wird und somit Anzeigen auf einer Anzeigevorrichtung (AV) des Mobilteils (MT) wechseln -die Anzeigevorrichtung (AV) also nicht im Ruhezustand ist und die mit der Steuerungseinrichtung (SE-M) eine Funktionseinheit derart bildet, dass, wenn die Anzeigevorrichtung (AV) nicht im Ruhezustand ist, mit dem Herstellen der Anmeldebereitschaft nicht begonnen wird.

## Claims

1. Method for registering battery-operated mobile parts (MT) on base stations (BS) with a battery charging device (ALE) from telecommunication systems for wireless telecommunication, in which a registration readiness state is set up between the mobile part (MT) to be registered and the base station (BS) and in which a registration procedure - registration of the mobile part (MT) on the base station (BS) when they are ready for registration - is performed by wireless telecommunication, wherein prescribed registration data, particularly identifiers that are specific to base stations, mobile parts, systems and products, are transmitted between the mobile part (MT) and the base station (BS) and are stored in memory (SP-M, SP-B), **characterized in that**
the registration readiness state is set up by virtue of
a) the mobile part (MT) to be registered being routed to the battery charging device (ALE) of the base station (BS) and this involving the mobile part (MT) being connected to the base station (BS) by means of charging contacts (LK1-M, LK2-M, LK1-B, LK2-B),
b) at least when a battery (AK) of the mobile part (MT) is flat, the mobile part (MT) to be registered performing stabilization charging of the battery (AK) for an adjustable period,
c) the mobile part (MT) to be registered checking whether registration data (AD) are stored in the mobile part (MT), with setup or the registration readiness state being continued if there are no registration data (AD) stored, otherwise the process for setting up the registration readiness state is terminated,
d) the mobile part (MT) to be registered transmitting a signal (SI) to the base station (BS) via the charging contacts (LK1-M, LK2-M, LK1-B, LK2-B), said signal being used by the mobile part to be registered to notify the base station (BS) of the registration readiness state of the mobile part, wherein the signal (SI) is produced by virtue of the connection between the mobile part (MT) and the base station (BS) being broken and remade by means of the charging contacts (LK1-M, LK2-M, LK1-B, LK2-B) from the mobile part (MT) at least once,
e) the base station (BS) recognizing the signal (SI) and for its part transmitting a confirmation signal (BSI) to the mobile part (MT), said confirmation signal being used by the base station to confirm receipt of the signal (SI) to the mobile part (MT) and to notify it of the registration readiness state of the base station,
f) the mobile part (MT) to be registered recognizing the confirmation signal (BSI) and beginning the registration procedure.

2. Method according to Claim 1, **characterized in that** the transmission of the confirmation signal (BSI) prompts the base station (BS) to initiate a respective chronometer (ZM-M, ZM-B) for measuring a period of time between a start time and an end time and producing a respective time stamp (ZS-M, ZS-B) for the measured period of time both in the base station (BS) and in the mobile part (MT).

3. Method according to Claim 2, **characterized in that** the initiation of the chronometer (ZM-M, ZM-B) prompts the latter to be started at different start times and stopped at different end times in the base station (BS) and in the mobile: part (MT) -

4. Method according to Claim 2 or 3, **characterized in that**
after the chronometer (ZM-M) is stopped the mobile part (MT) transmits the time stamp (ZS-M) produced by the chronometer (ZM-M) in the mobile part (MT) from the mobile part (MT) to the base station (BS) and the base station (BS) compares this transmitted time stamp (ZS-M) from the mobile part (MT) with the time stamp (ZS-B) from the base station (BS), wherein if the two time stamps (ZS-M, ZS-B) differ from one another at least by a prescribed value then the mobile part (MT) is not registered on the base station (BS).

5. Method according to one of Claims 1 to 4, **characterized in that** the confirmation signal (BSI) is produced by virtue of the connection between the mobile part (MT) and the base station (BS) being broken and restored by means of the charging contacts (LK1-M, LK2-M, LK1-B, LK2-B) from the base station (BS) at least once.

6. Method according to one of Claims 1 to 5, **characterized in that** the mobile part (MT) to be registered senses an actual value for a charging current (LST) that flows in the connection between the mobile part (MT) and the base station (BS) via the charging contacts (LK1-M, LK2-M, LK1-B, LK2-B) and, if this actual value is less than a prescribed setpoint value for the charging current (LST), interrupts the setup of the registration readiness state until the sensed actual value is equal to or greater than the setpoint value.

7. Method according to one of Claims 1 to 6, **characterized in that** the mobile part (MT) to be registered monitors whether the mobile part (MT), before being routed to the battery charging Device (ALE), is being operated by the user and hence displays on a display apparatus (AV) of the mobile part (MT) are changing - that is to say that the display apparatus (AV) is not in the idle state - and, if this is the case, does not begin setup of the registration readiness state.

8. Battery-operated mobile part (MT) for registration on a base station (BS) with a battery charging device (ALE) from telecommunication systems for wireless telecommunication, for which a registration readiness state can be set up with the base station (BS) and which, when the mobile part (MT) and the base station (BS) are ready for registration, can be registered on the base station (BS) in a registration procedure by wireless telecommunication, wherein prescribed registration data (AD), particularly identifiers that are specific to base stations, mobile parts, systems and products, are transmitted between the mobile part (MT) and the base station (BS) and stored, **characterized in that**
setup of the registration readiness state involves
a) the mobile part (MT) being able to be routed to the battery charging device (ALE) of the base station (BS) and having charging contacts (LK1-M, LK2-M) that are connected in the battery charging device (ALE) to further charging contacts (LK1-B, LK2-B) of the base station (BS),
b) a switching device (LS-M, S-M) being present that ensures, at least when a battery (AK) is flat, that said battery is charged for an adjustable period as stabilization charging,
c) means for checking a memory (SE-M) being present for the purpose of checking whether registration data are stored in a memory (SP-M),
d) the checking means (ÜPM) being designed and associated with a control device (SE-M) such that setup of the registration readiness state is continued if no registration data are stored, otherwise the process for setting up the registration readiness state is terminated,
e) means for producing a signal (SE-M, LS-M, S-M) being present that are connected to the charging contacts (LK1-M, LK2-M, LK1-B, LK2-B) and are designed such that a signal (SI) is produced and is transmitted to the base station (BS) in order to notify the base station (BS) of the registration readiness state of the mobile part, wherein the the signal producing means (SE-M, LS-M, S-M) comprise the switching device (LS-M, S-M) and the control device (SE-M), which are connected to one another and designed such that the signal is produced by virtue of the connection between the mobile part (MT) and the base station (BS) being broken and restored by means of the charging contacts (LK1-M, LK2-M, LK1-B, LK2-B) at least once,
f) means for recognizing a confirmation signal (BSEM) being present and being designed such that when the base station (BS) confirms receipt of the signal (SI) and provides notification of the registration readiness state of the base station by for its part producing a confirmation signal (BSI) and transmitting it to the mobile part (MT), they recognize said signal and they are associated with the control device (SE-M) and form a functional unit therewith such that when the confirmation signal (BS) is recognized the registration procedure is started.

9. Battery-operated mobile part according to Claim 8, **characterized in that** a chronometer (ZM-M) for measuring a period of time between a start time and an end time and producing a time stamp (ZS-M) for the measured period of time is present that is initiated by the base station (BS) upon the transmission of the confirmation signal (BSI) together with a further chronometer (ZM-B) in the base station (BS).

10. Battery-operated mobile part according to Claim 9, **characterized in that** the chronometer (ZM-M) is designed such, and connected to the control device (SE-M), a radio part (FT-M) and an antenna (AT-M) such, that after the chronometer (ZM-M) is stopped the time stamp (ZS-M) produced by the chronometer (ZM-M) in the mobile part (MT) is transmitted to the base station (BS) for a comparison with a further time stamp (ZS-B), which is produced by the chronometer (ZM-B) in the base station (BS), wherein if the two time stamps (ZS-M, ZS-B) differ from one another at least by a prescribed value if the mobile part (MT) is not registered on the base station (BS).

11. Battery-operated mobile part according to one of Claims 8 to 10, **characterized in that** the control device (SE-M) is designed such that a charging switch (LS-M) in the switching device (LS-M, S-M) is used to sense an actual value for a charging current (LST) that flows in the connection between the mobile part (MT) and the base station (BS) via the charging contacts (LK1-M, LK2-M, LK1-B, LK2-B) and, if this actual value is less than a prescribed setpoint value for the charging current (LST), the setup of the registration readiness state is interrupted until the sensed actual value is equal to or greater than the setpoint value.

12. Battery-operated mobile part according to one of Claims 8 to 11, **characterized in that** the control device (SE-M) has monitoring means (ÜWM) that monitor whether the mobile part (MT), before being routed to the battery charging device (ALE), is being operated by the user using a keypad (TA) and hence displays on a display apparatus (AV) of the mobile part (MT) are changing - that is to say that the display apparatus (AV) is not in the idle state - and that form a functional unit with the control device (SE-M) such that when the display apparatus (AV) is not in the idle state the setup of the registration readiness state is not begun

13. Telecommunication system for wireless telecommunication, comprising at least one base station (BS) with a battery charging device (ALE) and at least one battery-operated mobile part (MT), for registering the battery-operated mobile part (MT) on the base station (BS), in which a registration readiness state can be set up for the base station (BS) and the mobile part (MT) and in which, when the mobile part (MT) and the base station (BS) are ready for registration, the mobile part (MT) can be registered on the base station (BS) in a registration procedure by wireless telecommunication, wherein prescribed registration data (AD), particularly identifiers that are specific to base stations, mobile parts, systems and products, are transmitted between the mobile part (MT) and the base station (BS) and are stored in memory (ST-M, SP-B),
**characterized in that**
setup of the registration readiness state involves
a) the mobile part (MT) being able to be routed to the battery charging device (ALE) of the base station (BS) and having charging contacts (LK1-M, LK2-M) that are connected to further charging contacts (LK1-B, LK2-B) of the base station (BS),
b) a switching device (LS-M, S-M) being present in the mobile part (MT) to be registered that ensures, at least when a battery (AK) is flat, that said battery is charged for an adjustable period as stabilization charging,
c) means for checking a memory (SE-M) being present in the mobile part (MT) to be registered for the purpose of checking whether registration data are stored in the memory (SP-M),
d) the checking means (ÜPM) being designed and associated with a control device (SE-M) such that setup of the registration readiness state is continued if no registration data are stored, otherwise the process for setting up the registration readiness state is terminated,
e) means for producing a signal (SE-M, LS-M, S-M) being present in the mobile part (MT) to be registered that are connected to the charging contacts (LK1-M, LK2-M, LK1-B, LK2-B) and are designed such that a signal (SI) is produced and is transmitted to the base station (BS) in order to notify the base station (BS) of the registration readiness state of the mobile part, wherein the signal producing means (SE-M, LS-M, S-M) comprise the switching device (LS-M, S-M) and the control device (SE-M), which are connected to one another and designed such that the signal is produced by virtue of the connection between the mobile part (MT) and the base station (BS) being broken and restored by means of the charging contacts (LK1-M, LK2-M, LK1-B, LK2-B) at least once,
f) means for producing a confirmation signal (SE-B, LSB, S-B) being present in the base station (BS) that are connected to the charging contacts (LK1-M, LK2-M, LK1-B, LK2-B) and are designed such that a confirmation signal (BSI) is produced and is transmitted to the mobile part (MT) in order to confirm receipt of the signal (SI) to the mobile part (MT) and to notify it of the registration readiness state of the base station,
g) means for recognizing a confirmation signal (BSEM) being present in the mobile part (MT) to be registered and being designed such that they recognize the confirmation signal (BSI) and are associated with the control device (SE-M) and form a functional unit therewith such that when the confirmation signal (BSI) is recognized the registration procedure is started.

14. Telecommunication system according to Claim 13, **characterized in that** chronometers (ZM-M, ZM-B), one chronometer (ZM-M) in the mobile part (MT) and one chronometer (ZM-B) in the base station (BS), for measuring a period of time between a start time and an end time and producing time stamps (ZS-M, ZS-B), one time stamp (ZS-B) produced in the base station (BS) and one time stamp (ZS-M) produced in the mobile part (MT), for the measured period of time are present that are initiated by the base station (BS) upon the transmission of the confirmation signal (BSI).

15. Telecommunication system according to Claim 14, **characterized in that** the chronometer (ZM-M) in the mobile part (MT) is designed such, and connected to the control device (SE-M), a radio part (FT-M) and an antenna (AT-M) of the mobile part (MT) such, that after the chronometer (ZM-M) is stopped the time stamp (ZS-M) produced by the chronometer (ZM-M) in the mobile part (MT) is transmitted to the base station (BS) and a comparator (VG) is present in the base station (BS) that compares the time stamp (ZS-M) transmitted by the mobile part (MT) with the time stamp (ZS-B) that is produced by the chronometer (ZM-B) in the base station (BS) and that is associated with a control device (SE-B) in the base station (BS) and forms a functional unit therewith such that when the two time stamps (ZS-M, ZS-B) differ from one another at least by a prescribed value the mobile part (MT) is not registered on the base station (BS).

16. Telecommunication system according to one of Claims 13 to 15, **characterized in that** the confirmation signal producing means (SE-B, LS-B, S-B) comprise a switching device (LS-B, S-B) in the base station (BS) and a control device (SE-B) in the base station (BS) that are connected to one another and designed such that producing the confirmation signal (BSI) involves the connection between the mobile part (MT) and the base station (BS) being broken and restored by means of the charging contacts (LK1-M, LK2-M, LK1-B, LK2-B) from the base station (BS) at least once.

17. Telecommunication system according to one of Claims 13 to 16, **characterized in that** the control device (SE-M) in the mobile part (MT) to be registered is designed such that a charging switch (LS-M) in the switching device (LS-M, S-M) is used to sense an actual value for a charging current (LST) that flows in the connection between the mobile part (MT) and the base station (BS) via the charging contacts (LK1-M, LK2-M, LK1-B, LK2-B) and, if the actual value is less than a prescribed setpoint value for the charging current (LST), the setup of the registration readiness state is interrupted until the sensed actual value is equal to or greater than the setpoint value.

18. Telecommunication system according to one of Claims 13 to 17, **characterized in that** the control device (SE-M) in the mobile part (MT) to be registered has monitoring means (ÜWM) that monitor whether the mobile part (MT), before being routed to the battery charging device (ALE), is being operated by the user using a keypad (TA) and hence displays on a display apparatus (AV) of the mobile part (MT) are changing - that is to say that the display apparatus (AV) is not in the idle state - and that form a functional unit with the control device (SE-M) such that when the display apparatus (AV) is not in the idle state the setup of the registration readiness state is not begun.

## Revendications

1. Procédé destiné à enregistrer des combinés mobiles (MT) fonctionnant sur batterie sur des stations de base (BS) comportant un chargeur de batterie (ALE) de systèmes de télécommunications pour les télécommunications sans fil, dans lequel un état d'attente d'enregistrement entre le combiné mobile (MT) à enregistrer et la station de base (BS) est établi et dans lequel une procédure d'enregistrement, c'est-à-dire un enregistrement du combiné mobile (MT) sur la station de base (BS) lorsque ceux-ci sont en attente d'enregistrement, s'effectue par télécommunication sans fil, des données d'enregistrement prédéterminées, notamment des identifiants spécifiques de la station de base, du combiné mobile, du système et du produit, étant transmises entre le combiné mobile (MT) et la station de base (BS) et étant stockées dans une mémoire (SP-M, SP-B), **caractérisé en ce que** l'état d'attente d'enregistrement est établi en faisant en sorte que
a) le combiné mobile (MT) à enregistrer est alimenté par le chargeur de batterie (ALE) de la station de base (BS) de sorte que le combiné mobile (MT) est ainsi connecté à la station de base (BS) par l'intermédiaire de contacts de charge (LK1-M, LK2-M, LK1-B, LK2-B),
b) le combiné mobile (MT) à enregistrer effectue une charge de stabilisation de la batterie (AK) au moins lorsqu'une batterie (AK) du combiné mobile (MT) est vide pendant un intervalle de temps devant être regle,
c) le combiné mobile (MT) à enregistrer vérifie si des données d'enregistrement (AD) sont stockées dans le combiné mobile (MT), l'établissement de l'état d'attente d'enregistrement étant mis en oeuvre lorsque aucune donnée d'enregistrement (AD) n'est stockée et, dans le cas contraire, le processus d'établissement de l'état d'attente d'enregistrement étant interrompu,
d) le combiné mobile (MT) à enregistrer transmet à la station de base (BS), par l'intermédiaire des contacts de charge (LK1-M, LK2-M, LK1-B, LK2-B), un signal (SI) au moyen duquel il informe la station de base (BS) de l'état d'attente d'enregistrement du côté combiné mobile, le signal (SI) étant généré en faisant en sorte que la connexion entre le combiné mobile (MT) et la station de base (BS) par l'intermédiaire des contacts de charge (LK1-M, LK2-M, LK1-B, LK2-B) soit interrompue et rétablie au moins une fois par le combiné mobile (MT),
e) la station de base (BS) détecte le signal (SI) et transmet de son côté un signal de confirmation (BSI) au combiné mobile (MT), au moyen duquel elle confirme au combiné mobile (MT) la réception du signal (SI) et l'informe de l'état d'attente d'enregistrement du côté station de base,
f) le combiné mobile (MT) à enregistrer détecte le signal de confirmation (BSI) et démarre la procédure d'enregistrement.

2. Procédé selon la revendication 1, **caractérisé en ce que**, lors de la transmission du signal de confirmation (BSI), la station de base (BS) déclenche respectivement un compteur de temps (ZM-M, ZM-B) pour mesurer un intervalle de temps entre un instant de début et un instant de fin et pour générer respectivement un marqueur temporel (ZS-M, ZS-B) pour l'intervalle de temps mesuré à la fois dans la station de base (BS) et dans le combiné mobile (MT).

3. Procédé selon la revendication 2, **caractérisé en ce que**, lors du déclenchement du compteur de temps (ZM-M, ZM-B), celui-ci est démarré à des instants de début différents et est interrompu à des instants de fin différents dans la station de base (BS) et dans le combiné mobile (MT).

4. Procédé selon la revendication 2 ou 3, **caractérisé en ce que**, après l'arrêt du compteur de temps (ZM-M) dans le combiné mobile (MT), le marqueur temporel (ZS-M) généré par le compteur de temps (ZM-M) du combiné mobile (MT) est transmis du combiné mobile (MT) à la station de base (BS) et ce marqueur temporel transmis (ZS-M) du combiné mobile (MT) est comparé dans la station de base (BS) au marqueur temporel (ZS-B) de la station de base (BS), un enregistrement du combiné mobile (MT) sur la station de base (BS) n'étant pas effectué lorsque les deux marqueurs temporels (ZS-M, ZS-B) diffèrent l'un de l'autre d'au moins une valeur prédéterminée.

5. Procédé selon l'une quelconque des revendications 1 à 4, **caractérisé en ce que** le signal de confirmation (BSI) est généré en faisant en sorte que la connexion entre le combiné mobile (MT) et la station de base (BS) par l'intermédiaire des contacts de charge (LK1-M, LK2-M, LK1-B, LK2-B) soit interrompue et rétablie au moins une fois par la station de base (BS).

6. Procédé selon l'une quelconque des revendications 1 à 5, **caractérisé en ce que** le combiné mobile (MT) à enregistrer détecte une valeur instantanée d'un courant de charge (LST) qui passe dans la connexion entre le combiné mobile (MT) et la station de base (BS) par l'intermédiaire des contacts de charge (LK1-M, LK2-M, LK1-B, LK2-B) et **en ce que**, lorsque cette valeur instantanée est inférieure à une valeur nominale prédéterminée du courant de charge (LST), elle interrompt l'établissement de l'état d'attente
- 4 -
d'enregistrement jusqu'à ce que la valeur instantanée détectée soit supérieure ou égale à la valeur nominale.

7. Procédé selon l'une quelconque des revendications 1 à 6, **caractérisé en ce que** le combiné mobile (MT) à enregistrer surveille si le combiné mobile (MT), avant qu'il soit alimenté par le chargeur de batterie (ALE), est utilisé par l'utilisateur et par conséquent, si des affichages alternent sur un dispositif d'affichage (AV) du combiné mobile (MT), le dispositif d'affichage (AV) n'étant donc pas dans un état de repos et, lorsque cela est le cas, **en ce qu'**il ne procède pas à l'établissement de l'état d'attente d'enregistrement.

8. Combiné mobile (MT) fonctionnant sur batterie devant s'enregistrer sur une station de base (BS) comportant un chargeur de batterie (ALE) de systèmes de télécommunications pour les télécommunications sans fil, pour lequel un état d'attente d'enregistrement à la station de base (BS) peut être établi et qui, lorsque le combiné mobile (MT) et la station de base (BS) sont en attente d'enregistrement, peut s'enregistrer sur la station de base (BS) lors d'une procédure d'enregistrement par télécommunications sans fil, des données d'enregistrement (AD) prédéterminées, notamment des identifiants spécifiques de la station de base, du combiné mobile, du système et du produit, étant transmises entre le combiné mobile (MT) et la station de base (BS) et étant stockées, **caractérisé en ce que**, pour établir l'état d'attente d'enregistrement,
a) le combiné mobile (MT) peut être alimenté par le chargeur de batterie (ALE) de la station de base (BS) et comprend des contacts de charge (LK1-M, LK2-M) qui sont reliés dans le chargeur de batterie (ALE) à d'autres contacts de charge (LK1-B, LK2-B) de la station de base (BS),
b) il est prévu un dispositif de commutation (LS-M, S-M) qui fait en sorte qu'au moins lorsqu'une batterie (AK) est vide, celle-ci soit chargée pendant un intervalle de temps à régler en tant que charge de stabilisation,
c) il est prévu des moyens destinés à vérifier une mémoire (SE-M) pour vérifier si des données d'enregistrement sont stockées dans une mémoire (SP-M),
d) les moyens de vérification (ÜPM) sont conçus et sont associés à un dispositif de commande (SE-M) de telle manière que l'établissement de l'état d'attente d'enregistrement soit mis en oeuvre lorsque aucune donnée d'enregistrement n'est stockée et que, dans le cas contraire, le processus d'établissement de l'état d'attente d'enregistrement soit interrompu,
e) il est prévu des moyens destinés à générer un signal (SE-M, LS-M, S-M) qui sont reliés aux contacts de charge (LK1-M, LK2-M, LK1-B, LK2-B) et qui sont conçus de telle manière qu'un signal (SI) soit généré et soit transmis à la station de base (BS) afin d'informer la station de base (BS) de l'état d'attente d'enregistrement du côté combiné mobile, les moyens générateurs de signal (SE-M, LS-M, S-M) étant constitués du dispositif de commutation (LS-M, S-M) et du dispositif de commande (SE-M), qui sont reliés l'un à l'autre et sont conçus de telle manière que, pour générer le signal, la connexion entre le combiné mobile (MT) et la station de base (BS) soit interrompue et soit rétablie au moins une fois par l'intermédiaire des contacts de charge (LK1-M, LK2-M, LK1-B, LK2-B),
f) il est prévu des moyens destinés à détecter un signal de confirmation (BSEM), qui sont conçus de telle manière que, lorsque la station de base (BS) génère de son côté un signal de confirmation (BSI) pour confirmer la réception du signal (SI) et pour informer de l'état d'attente d'enregistrement du côté station de base et le transmet au combiné mobile (MT), ils détectent ce signal, et qui sont associés au dispositif de commande (SE-M) et forment avec celui-ci une unité fonctionnelle de manière à démarrer la procédure d'enregistrement lorsque le signal de confirmation (BST) est détecté.

9. Combiné mobile fonctionnant sur batterie selon la revendication 8, **caractérisé en ce qu'**il est prévu un compteur de temps (ZM-M) destiné à mesurer un intervalle de temps entre un instant de début et un instant de fin et à générer un marqueur temporel (ZS-M) pour l'intervalle de temps mesuré, lequel compteur de temps est déclenché par la station de base (BS) lors de la transmission du signal de confirmation (BSI) en association avec un autre compteur de temps (ZM-B) dans la station de base (BS).

10. Combiné mobile fonctionnant sur batterie selon la revendication 9, **caractérisé en ce que** le compteur de temps (ZM-M) est conçu et est connecté au dispositif de commande (SE-M), à une partie radio (FT-M) et à une antenne (AT-M) de telle manière qu'après l'arrêt du compteur de temps (ZM-M), le marqueur temporel (ZS-M) généré par le compteur de temps (ZM-M) du combiné mobile (MT) soit transmis à la station de base (BS) aux fins d'une comparaison avec un autre marqueur temporel (ZS-B) qui est généré par le compteur de temps (ZM-B) de la station de base (BS), un enregistrement du combiné mobile (MT) la station de base (BS) n'étant pas effectué lorsque les deux marqueurs temporels (ZS-M, ZS-B) diffèrent l'un de l'autre d'au moins une valeur prédéterminée.

11. Combiné mobile fonctionnant sur batterie selon l'une quelconque des revendications 8 à 10, **caractérisé en ce que** le dispositif de commande (SE-M) est conçu de telle manière qu'une valeur instantanée d'un courant de charge (LST) qui passe dans la connexion entre le combiné mobile (MT) et la station de base (BS) par l'intermédiaire des contacts de charge (LK1-M, LK2-M, LK1-B, LK2-B) soit détectée par l'intermédiaire d'un commutateur de charge (LS-M) du dispositif de commutation (LS-M, S-M) et que, lorsque cette valeur instantanée est inférieure à une valeur de seuil prédéterminée du courant de charge (LST), l'établissement de l'état d'attente d'enregistrement soit interrompu jusqu'à ce que la valeur instantanée détectée soit supérieure ou égale à la valeur nominale.

12. Combiné mobile fonctionnant sur batterie selon l'une quelconque des revendications 8 à 11, **caractérisé en ce que** le dispositif de commande (SE-M) comprend des moyens de surveillance (ÜWM) qui surveillent si le combiné mobile (MT), avant qu'il soit alimenté par le chargeur de batterie (ALE), est utilisé par l'utilisateur au moyen d'un clavier (TA) et par conséquent, si des affichages alternent sur un dispositif d'affichage (AV) du combiné mobile (MT), le dispositif d'affichage (AV) n'étant donc pas dans un état de repos, et qui forment avec le dispositif de commande (SE-M) une unité fonctionnelle de telle manière que, lorsque le dispositif d'affichage (AV) n'est pas dans l'état de repos, l'établissement de l'état d'attente d'enregistrement ne soit pas démarré.

13. Système de télécommunication destiné aux télécommunications sans fil, comprenant au moins une station de base (BS) comportant un chargeur de batterie (ALE) et au moins un combiné mobile (MT) fonctionnant sur batterie, destiné à enregistrer le combiné mobile (MT) fonctionnant sur batterie à la station de base (ES), dans lequel un état d'attente d'enregistrement peut être établi pour la station de base (BS) et le combiné mobile (MT) et dans lequel, lorsque le combiné mobile (MT) et la station de base (BS) sont en attente d'enregistrement, lors d'une procédure d'enregistrement par télécommunications sans fil, le combiné mobile (MT) peut s'enregistrer sur la station de base (BS), des données d'enregistrement (AD) prédéterminées, notamment des identifiants spécifiques de la station de base, du combiné mobile, du système et du produit, étant transmises entre le combiné mobile (MT) et la station de base (BS) et étant stockées dans une mémoire (SP-M,
SP-B), **caractérisé en ce que**,
pour établir l'état d'attente d'enregistrement,
a) le combiné mobile (MT) peut être alimenté par le chargeur de batterie (ALE) de la station de base (BS) et comprend des contacts de charge (LK1-M, LK2-M) qui sont reliés à d'autres contacts de charge (LK1-B, LK2-B) de la station de base (BS),
b) il est prévu dans le combiné mobile (MT) un dispositif de commutation (LS-M, S-M) qui fait en sorte qu'au moins lorsqu'une batterie (AK) est vide, celle-ci soit chargée pendant un intervalle de temps à régler en tant que charge de stabilisation,
c) il est prévu dans le combiné mobile (MT) à enregistrer des moyens destinés à vérifier une mémoire (ÜPM) pour vérifier si des données d'enregistrement sont stockées dans la mémoire (SP-M),
d) les moyens de vérification (ÜPM) sont conçus et sont associés à un dispositif de commande (SE-M) de telle manière que l'établissement de l'état d'attente d'enregistrement soit mis en oeuvre lorsque aucune donnée d'enregistrement n'est stockée et que, dans le cas contraire, le processus d'établissement de l'état d'attente d'enregistrement soit interrompu,
e) il est prévu dans le combiné mobile (MT) à enregistrer des moyens destinés à générer un signal (SE-M, LS-M, S-M) qui sont reliés aux contacts de charge (LK1-M, LK2-M, LK1-B, LK2-B) et qui sont conçus de telle manière qu'un signal (SI) soit généré et soit transmis à la station de base (BS) afin d'informer la station de base (BS) de l'état d'attente d'enregistrement du côté combiné mobile, les moyens générateurs de signal (SE-M, LS-M, S-M) étant constitués du dispositif de commutation (LS-M, S-M) et du dispositif de commande (SE-M), qui sont connectés l'un à l'autre et sont conçus de telle manière que, pour générer le signal, la connexion entre le combiné mobile (MT) et la station de base (BS) soit interrompue et soit rétablie au moins une fois par l'intermédiaire des constacts de charge (LK1-M), LK2-M, LK-B, LK2-B),
f) il est prévu dans la station de base (BS) des moyens destinés à détecter un signal de confirmation (SE-B, LSB, S-B), qui sont connectés aux contacts de charge (LK1-M, LK2-M, LK1-B, LK2-B) et sont conçus de telle manière qu'un signal de confirmation (BSI) soit généré et soit transmis au combiné mobile (MT) afin de confirmer au combiné mobile (MT) la réception du signal (SI) et de l'informer de l'état d'attente d'enregistrement du côté station de base,
g) il est prévu dans le combiné mobile (MT) à enregistrer des moyens destinés à détecter un signal de confirmation (BSEM), qui sont conçus de telle manière qu'ils détectent le signal de confirmation (BSI) et qui sont associés au dispositif de commande (SE-M) et forment avec celui-ci une unité fonctionnelle de manière à démarrer la procédure d'enregistrement lorsque le signal de confirmation (BSI) est détecté.

14. Système de télécommunication selon la revendication 13, **caractérisé en ce qu'**il est prévu des compteurs de temps (ZM-M, ZM-B), à savoir un compteur de temps (ZM-M) dans le combiné mobile (MT) et un compteur de temps (ZM-B) dans la station de base (BS), destinés à mesurer un intervalle de temps entre un instant de début et un instant de fin et à générer des marqueurs temporels (ZS-M, ZS-B), à savoir un marqueur temporel (ZS-B) généré dans la station de base (BS) et un marqueur temporel (ZS-M) généré dans le combiné mobile (MT), pour l'intervalle de temps mesuré, lesquels compteurs de temps sont déclenchés par la station de base (BS) lors de la transmission du signal de confirmation (BSI).

15. Système de télécommunication selon la revendication 14, **caractérisé en ce que** le compteur de temps (ZM-M) du combiné mobile (MT) est conçu de telle manière et est connecté de telle manière au dispositif de commande (SE-M), à une partie radio (FT-M) et à une antenne (AT-M) du combiné mobile (MT) qu'après l'arrêt du compteur de temps (ZM-M), le marqueur temporel (ZS-M) généré par le compteur de temps (ZM-M) du combiné mobile (MT) soit transmis la station de base (BS) et **en ce qu'**il est prévu dans la station de base (BS) un comparateur (VG) qui compare le marqueur temporel (ZS-M) transmis par le combiné mobile (MT) au marqueur temporel (ZS-B) généré par le compteur de temps (ZM-B) de la station de base (BS), et qui est associé à un dispositif de commande (SE-B) de la station de base (BS) et forme avec celui-ci une unité fonctionnelle de telle manière qu'un enregistrement du combiné mobile (MT) la station de base (BS) ne soit pas effectué lorsque les deux marqueurs temporels (ZS-M, ZS-B) diffèrent l'un de l'autre d'au moins une valeur prédéterminée.

16. Système de télécommunication selon l'une quelconque des revendications 13 à 15, **caractérisé en ce que** les moyens générateurs de signal de confirmation (SE-B, LS-B, S-B) sont constitués d'un dispositif de commutation (LS-B, S-B) dans la station de base (BS) et d'un dispositif de commande (SE-B) dans la station de base (BS) qui sont reliés l'un à l'autre et sont conçus de telle de manière que, pour générer le signal de confirmation (BSI), la connexion entre le combiné mobile (MT) et la station de base (BS) soit interrompue et soit rétablie au moins une fois par la station de base (BS) par l'intermédiaire des contacts de charge (LK1-M, LK2-M, LK1-B, LK2-B).

17. Système de télécommunication selon l'une quelconque des revendications 13 à 16, **caractérisé en ce que** le dispositif de commande (SE-M) du combiné mobile (MT) à enregistrer est conçu de telle manière qu'une valeur instantanée d'un courant de charge (LST) qui passe dans la connexion entre le combiné mobile (MT) et la station de base (BS) par l'intermédiaire des contacts de charge (LK1-M, LK2-M, LK1-B, LK2-B) soit détectée par l'intermédiaire d'un commutateur de charge (LS-M) du dispositif de commutation (LS-M, S-M) et **en ce que**, lorsque cette valeur instantanée est inférieure à une valeur nominale prédéterminée du courant de charge (LST), l'établissement de l'état d'attente d'enregistrement soit interrompu jusqu'à ce que la valeur instantanée détectée soit supérieure ou égale à la valeur nominale.

18. Système de télécommunication selon l'une quelconque des revendications 13 à 17, **caractérisé en ce que** le dispositif de commande (SE-M) du combiné mobile (MT) à enregistrer comprend des moyens de vérification ÜWM) qui vérifient si le combiné mobile (MT), avant qu'il soit alimenté par le chargeur de batterie (ALE), est utilisé par un utilisateur au moyen d'un clavier (TA) et par conséquent, si des affichages alternent sur un dispositif d'affichage (AV) du combiné mobile (MT), le dispositif d'affichage (AV) n'étant donc pas dans un état de repos, et qui forment avec le dispositif de commande (SE-M) une unité fonctionnelle de telle manière que, lorsque le dispositif d'affichage (AV) n'est pas au repos, il ne soit pas procédé à l'établissement de l'état d'attente d'enregistrement.
